(19) Europäisches Patentamt / European Patent Office / Office européen des brevets

(11) **EP 4 686 317 A1**

(12) **EUROPEAN PATENT APPLICATION**
published in accordance with Art. 153(4) EPC

(43) Date of publication:
**28.01.2026 Bulletin 2026/05**

(21) Application number: **24784240.4**

(22) Date of filing: **01.04.2024**

(51) International Patent Classification (IPC):
*H04W 76/27* (2018.01)

(52) Cooperative Patent Classification (CPC):
**H04W 68/02; H04W 72/30; H04W 76/27; H04W 76/40**

(86) International application number:
**PCT/CN2024/085374**

(87) International publication number:
**WO 2024/208156 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310417360**

(71) Applicant: **HUAWEI TECHNOLOGIES CO., LTD.**
**Shenzhen 518129 (CN)**

(72) Inventors:
• **LIU, Nannan**
  **Shenzhen, Guangdong 518129 (CN)**

• **LI, Bingzhao**
  **Shenzhen, Guangdong 518129 (CN)**
• **MAO, Yingchao**
  **Shenzhen, Guangdong 518129 (CN)**
• **CHANG, Junren**
  **Shenzhen, Guangdong 518129 (CN)**
• **WANG, Yan**
  **Shenzhen, Guangdong 518129 (CN)**
• **SHA, Tong**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **COMMUNICATION METHOD, APPARATUS AND SYSTEM**

(57) Embodiments of this application provide a communication method, apparatus, and system, and relate to the field of communication technologies. The method is used to ensure that receiving of a multicast service is not affected when a paging of SDT transmission conflicts with a paging of the multicast service. The method includes: A terminal apparatus receives a first paging message. When a first condition and a second condition are satisfied, the terminal apparatus initiates radio resource control RRC connection resume associated with not entering an RRC connected state. The first condition includes: The first paging message includes a first identifier of the terminal apparatus and first indication information. The first identifier of the terminal apparatus is associated with a radio access network RAN paging. The first indication information indicates MT-SDT information. The second condition includes: The terminal apparatus has not received a multicast paging or a multicast activation notification associated with entering the RRC connected state. The method can resolve a paging conflict problem when the first paging message includes two different types of pagings.

FIG. 5

(Step 501: Receive a first paging message → Step 502A: Initiate RRC connection resume associated with not entering an RRC connected state / Step 502B: Initiate RRC connection resume associated with entering an RRC connected state)

## Description

This application claims priority to Chinese Patent Application No. 202310417360.0, filed with the China National Intellectual Property Administration on April 7, 2023 and entitled "COMMUNICATION METHOD, APPARATUS, AND SYSTEM", which is incorporated herein by reference in its entirety.

## TECHNICAL FIELD

This application relates to the field of wireless communication technologies, and in particular, to a communication method, apparatus, and system.

## BACKGROUND

In a wireless communication system, a network device may page a terminal device in an RRC idle state or an RRC inactive state by sending a paging message. After receiving the paging message, the terminal device in the RRC idle state or the RRC inactive state may enter an RRC connected state.

A multicast and broadcast service (multicast and broadcast service, MBS) is introduced by 3GPP to effectively utilize resources of a mobile communication network. In the mobile communication network, the MBS provides a point-to-multipoint service in which a data source sends data to a plurality of users, to implement network resource sharing and improve utilization of resources, especially air interface resources. At present, in the MBS, after the multicast service is deactivated, a terminal device may be in an RRC connected state, or may be in an RRC idle state or an RRC inactive state. After the multicast service is activated, a network device may send a multicast activation notification by using a paging message. After receiving the multicast activation notification included in the paging message, the terminal device in the RRC inactive state may enter the connected state to receive the multicast service.

However, in some scenarios, after the network device sends the multicast activation notification by using the paging message, the terminal device in the RRC inactive state may not be able to enter the RRC connected state, and consequently cannot receive the multicast service.

## SUMMARY

Embodiments of this application provide a communication method, apparatus, and system. The method is used to ensure that receiving of a multicast service is not affected when a paging of SDT transmission conflicts with a paging of the multicast service.

To resolve the foregoing technical problem, embodiments of this application provide the following technical solutions.

According to a first aspect, an embodiment of this application provides a communication method, including: A first terminal apparatus receives a first paging message. When a first condition and a second condition are satisfied, the first terminal apparatus initiates radio resource control RRC connection resume associated with not entering an RRC connected state. The first condition includes: The first paging message includes a first identifier of the first terminal apparatus and first indication information. The first identifier of the first terminal apparatus is associated with a radio access network RAN paging. The first indication information indicates mobile terminated MT-small data transmission SDT information. The second condition includes: The first terminal apparatus has not received a multicast paging or a multicast activation notification associated with entering the RRC connected state.

In the foregoing solution, when receiving the first paging message, the first terminal apparatus may determine that the first terminal apparatus receives data of a multicast service without needing to enter the RRC connected state. In this way, the first terminal apparatus initiates, based on the first paging message, the radio resource control RRC connection resume associated with not entering the RRC connected state, to ensure that receiving of the multicast service is not affected when a paging of SDT transmission conflicts with a paging of the multicast service.

In a possible implementation of this application, that the first terminal apparatus has not received the multicast paging or the multicast activation notification associated with entering the RRC connected state includes any one of the following: The first paging message does not include information about an identifier of a first multicast service; the first paging message includes information about an identifier of a first multicast service, and the first terminal apparatus has received second indication information, where the second indication information indicates that the first terminal apparatus receives a multicast service without needing to enter the RRC connected state, or the second indication information is associated with not entering the RRC connected state; or the first paging message includes information about an identifier of a first multicast service, and the first terminal apparatus has not received third indication information, where the third indication information indicates that the first terminal apparatus needs to enter the RRC connected state to receive a multicast service, or the third indication information is associated with entering the RRC connected state. In this way, after receiving the first paging message, the first terminal apparatus determines, based on the foregoing content, that the multicast paging or the multicast activation notification associated with entering the RRC connected state has not been received.

In a possible implementation of this application, the first condition and the second condition are satisfied, and a fifth condition is further satisfied. The fifth condition includes any one of the following: The first terminal apparatus has no uplink service; or the first terminal apparatus has an uplink service, and a condition for initiating mobile originated MO-SDT is satisfied. This can ensure that uplink service transmission of the first terminal apparatus is not affected even if the first terminal apparatus does not enter the RRC connected state.

In a possible implementation of this application, that the first terminal apparatus initiates the RRC connection resume associated with not entering the RRC connected state includes any one or more of the following: When a condition for initiating CG-SDT is satisfied, the first terminal apparatus initiates, by using a CG resource, the RRC connection resume associated with not entering the RRC connected state; when a condition for initiating CG-SDT is not satisfied, if the first terminal apparatus has no uplink service, the first terminal apparatus initiates, by using a legacy RACH resource, the RRC connection resume associated with not entering the RRC connected state; or when a condition for initiating CG-SDT is not satisfied, if the first terminal apparatus has an uplink service and the condition for initiating the MO-SDT is satisfied, the first terminal apparatus initiates, by using an SDT RACH resource, the RRC connection resume associated with not entering the RRC connected state.

The first terminal apparatus may select, as required, an appropriate resource to initiate the RRC connection resume associated with not entering the RRC connected state.

In a possible implementation of this application, that the first terminal apparatus initiates the RRC connection resume associated with not entering the RRC connected state includes: The first terminal apparatus determines a first RRC connection resume cause based on a first policy; or the first terminal apparatus determines a first RRC connection resume cause based on a second policy, where the second policy includes at least one of the MT-SDT information and information about an RRC connection resume cause indicated by an upper layer. In a process of initiating the RRC connection resume associated with not entering the RRC connected state, the first RRC connection resume cause is sent, so that a network device learns a reason why the first terminal apparatus initiates the RRC connection resume but does not enter the RRC connected state.

In an example, the first RRC connection resume cause may be the MT-SDT information. In this way, the network device learns that the reason why the first terminal apparatus initiates the RRC connection resume but does not enter the RRC connected state is MT-SDT.

In a possible implementation of this application, after the first terminal apparatus receives the first paging message, the method provided in this embodiment of this application further includes: When a third condition is satisfied, the first condition and the third condition are satisfied, the first condition and a fourth condition are satisfied, or the first condition, the third condition, and the fourth condition are satisfied, the first terminal apparatus initiates RRC connection resume associated with entering the RRC connected state. Constraints are added, so that the first terminal apparatus determines, when receiving the multicast paging or the multicast activation notification, to promptly initiate the RRC connection resume associated with entering the RRC connected state, to ensure that receiving of the multicast service is not affected. It can be understood that, if the first condition and the third condition are satisfied, or the first condition, the third condition, and the fourth condition are satisfied, it indicates that the first paging message received by the first terminal apparatus includes both the multicast paging/multicast activation notification for entering the RRC connected state and an MT-SDT paging for not entering the RRC connected state, and the two types of pagings conflict with each other. In this case, the first terminal apparatus chooses to initiate the RRC connection resume associated with entering the RRC connected state, to promptly resume to the RRC connected state, thereby ensuring that receiving of the multicast service is not affected.

The third condition includes one or more pieces of content used by the first terminal apparatus to determine that the multicast paging or the multicast activation notification associated with entering the RRC connected state has been received.

In an example, the third condition includes any one of the following: The first paging message includes the information about the identifier of the first multicast service, and the first terminal apparatus has not received the second indication information; or the first paging message includes the information about the identifier of the first multicast service, and the first terminal apparatus has received the third indication information. The fourth condition includes: The first terminal apparatus has an uplink service, and the condition for initiating the mobile originated MO-SDT is not satisfied.

In a possible implementation of this application, that the first terminal apparatus initiates the RRC connection resume associated with entering the RRC connected state includes any one or more of the following: The first terminal apparatus determines a second RRC connection resume cause based on a third policy, where the third policy includes an RRC connection resume cause indicated by an upper layer; the first terminal apparatus determines a second RRC connection resume cause based on a fourth policy, where the fourth policy includes an access identity; or the first terminal apparatus determines a second RRC connection resume cause based on a fifth policy, where the fifth policy includes at least one of an access identity and an RRC connection resume cause indicated by an upper layer. In this way, the network device learns a reason why the first terminal apparatus initiates the RRC connection resume and requests to enter the RRC connected state. Optionally, that the first terminal apparatus initiates, based on the second RRC connection resume cause, the RRC connection resume associated with entering the RRC connected state includes: The first terminal apparatus sends the second RRC connection resume cause to the network device.

In a possible implementation of this application, the method provided in this embodiment of this application further includes any one or more of the following: The first terminal apparatus determines the second RRC connection resume cause based on the third policy when the third condition is not satisfied, or when the third condition is not satisfied and the fourth condition is satisfied;

the first terminal apparatus determines the second RRC connection resume cause based on the fourth policy when the fourth condition is not satisfied, or when the third condition is satisfied and the fourth condition is not satisfied; or
the first terminal apparatus determines the second RRC connection resume cause based on the fifth policy when the third condition and the fourth condition are satisfied.

In a possible implementation of this application, the first multicast service includes a multicast service that the first terminal apparatus joins. The first paging message carries an identifier of the multicast service that the first terminal apparatus joins, to promptly wake up the first terminal apparatus to enter the RRC connected state.

In a possible implementation of this application, that the first terminal apparatus has received the second indication information includes: The first paging message includes the second indication information; and/or that the first terminal apparatus has not received the second indication information includes: The first paging message does not include the second indication information.

In a possible implementation of this application, that the first terminal apparatus has not received the third indication information includes: The first paging message does not include the third indication information; and/or that the first terminal apparatus has received the third indication information includes: The first paging message includes the third indication information.

In a possible implementation of this application, the method provided in this embodiment of this application may further include: The first terminal apparatus receives, in the RRC connected state, first signaling configured by the network device. The first signaling indicates that the first terminal apparatus receives a multicast service without needing to enter the RRC connected state, or the first signaling is associated with not entering the RRC connected state. Optionally, the first signaling includes the second indication information. Correspondingly, that the first terminal apparatus has not received the second indication information can also be understood that the first terminal apparatus has not received the first signaling.

In a possible implementation of this application, the method provided in this embodiment of this application may further include: The first terminal apparatus receives second signaling in the RRC connected state. The second signaling indicates that the first terminal apparatus needs to enter the RRC connected state to receive a multicast service, or the second signaling is associated with entering the RRC connected state. Optionally, the second signaling includes the third indication information. Correspondingly, that the first terminal apparatus has not received the third indication information can also be understood that the first terminal apparatus has not received the second signaling.

It can be understood that the third indication information indicates the first terminal apparatus to receive the multicast service in the RRC connected state.

According to a second aspect, an embodiment of this application provides a communication method, including: A first terminal apparatus receives a first paging message. When the first paging message satisfies a sixth condition a seventh condition, the first terminal apparatus skips initiating RRC connection resume associated with an RRC connected state and skips entering an RRC idle state. The sixth condition includes: The first terminal apparatus has received a multicast paging or a multicast activation notification associated with not entering the RRC connected state. The seventh condition includes: The first paging message does not include an identifier of the first terminal apparatus.

In a possible implementation of this application, the sixth condition includes any one of the following: the first paging message includes information about an identifier of a first multicast service, and the first terminal apparatus has received second indication information, where the second indication information indicates that the first terminal apparatus receives a multicast service without needing to enter the RRC connected state, or the second indication information is associated with not entering the RRC connected state; or the first paging message includes information about an identifier of a first multicast service, and the first terminal apparatus has not received third indication information, where the third indication information indicates that the first terminal apparatus needs to enter the RRC connected state to receive a multicast service, or the third indication information is associated with entering the RRC connected state.

In a possible implementation of this application, the seventh condition further includes: The first terminal apparatus has not received a multicast paging or a multicast activation notification associated with entering the RRC connected state.

In a possible implementation of this application, after the first terminal apparatus receives the first paging message, the method provided in this embodiment of this application further includes any one or more of the following:

when a first condition and a second condition are satisfied, the first terminal apparatus initiates radio resource control RRC connection resume associated with not entering the RRC connected state;

when a third condition is satisfied, a first condition and the third condition are satisfied, the first condition and a fourth condition are satisfied, or the first condition, the third condition, and the fourth condition are satisfied, the first terminal apparatus initiates RRC connection resume associated with entering the RRC connected state; or when an eighth condition is satisfied, the first terminal apparatus enters the RRC idle state.

In a possible implementation of this application, the third condition includes any one of the following: The first paging message includes the information about the identifier of the first multicast service, and the first terminal apparatus has not received the second indication information; or the first paging message includes the information about the identifier of the first multicast service, and the first terminal apparatus has received the third indication information. The fourth condition includes: The first terminal apparatus has an uplink service, and a condition for initiating MO-SDT is not satisfied. The eighth condition includes: The first paging message includes a second identifier of the first terminal apparatus.

According to a third aspect, an embodiment of this application provides a communication method. The method includes: A first network device triggers an MT-SDT paging, a first network device receives SDT data related to a first terminal apparatus, or a first network device receives an SDT-related paging; and the first network device sends an MT-SDT paging for the first terminal apparatus when a ninth condition and/or an eleventh condition are/is satisfied. The ninth condition includes: The first network device does not send or does not need to send information related to a multicast paging or a multicast activation notification associated with entering an RRC connected state. The eleventh condition includes: In first duration before the MT-SDT paging for the first terminal apparatus is sent or before the MT-SDT paging for the first terminal apparatus is sent, the first network device has not sent the information related to the multicast paging or the multicast activation notification associated with entering the RRC connected state.

In the foregoing solution, when the first network device triggers the MT-SDT paging, the first network device receives the SDT data related to the first terminal apparatus, or the first network device receives the SDT-related paging, if the first network device determines that the ninth condition and/or the eleventh condition are/is satisfied, the first network device may determine that the information related to the multicast paging or the multicast activation notification associated with entering the RRC connected state does not need to be sent, and send the MT-SDT paging to the first terminal apparatus. In this way, a conflict between two different types of pagings can be avoided on a network device side.

In a possible implementation of this application, that the first network device does not send or does not need to send the information related to the multicast paging or the multicast activation notification associated with entering the RRC connected state includes any one or more of the following: For a multicast service that the first terminal apparatus joins or subscribes to, the first network device does not send or does not need to send the information related to the multicast paging or the multicast activation notification associated with entering the RRC connected state; for a multicast service that the first terminal apparatus joins or subscribes to, the first network device has not received multicast data, paging-related information, or activation notification-related information sent by a core network device; or for a multicast service that the first terminal apparatus joins or subscribes to, the first network device has not received paging-related information or activation notification-related information sent by another network device.

In a possible implementation of this application, that the first network device has not sent the information related to the multicast paging or the multicast activation notification associated with entering the RRC connected state includes any one or more of the following: For the multicast service that the first terminal apparatus joins or subscribes to, the first network device has not sent the information related to the multicast paging or the multicast activation notification associated with entering the RRC connected state; for the multicast service that the first terminal apparatus joins or subscribes to, the first network device has not received the multicast data, the paging-related information, or the activation notification-related information sent by the core network device; or for the multicast service that the first terminal apparatus joins or subscribes to, the first network device has not received the paging-related information or the activation notification-related information sent by the another network device.

In a possible implementation of this application, after the first network device triggers the MT-SDT paging, the first network device receives the SDT data related to the first terminal apparatus, or the first network device receives the SDT-related paging, the method provided in this embodiment of this application further includes: The first network device skips sending the MT-SDT paging for the first terminal apparatus when a tenth condition and/or a twelfth condition are/is satisfied. The tenth condition includes: The first network device sends or needs to send the information related to the multicast paging or the multicast activation notification associated with entering the RRC connected state. The twelfth condition includes: In first duration before the MT-SDT paging for the first terminal apparatus is sent or before the MT-SDT paging for the first terminal apparatus is sent, the first network device sends the information related to the multicast paging or the multicast activation notification associated with entering the RRC connected state. When the first network device triggers the MT-SDT paging, the first network device receives the SDT data related to the first terminal apparatus, or the first network device receives the SDT-related paging, if the tenth condition and/or the twelfth condition are/is satisfied, it indicates that the first network device needs to trigger the first terminal apparatus to enter the RRC connected state to receive data of the multicast service, that is, the MT-SDT paging conflicts with a paging for entering the RRC connected state. Therefore, the first network device skips sending the MT-SDT paging for the first terminal apparatus, but sends the paging for entering the RRC connected state in this case. This can ensure that receiving of the multicast service of the first terminal apparatus is not affected. In other words, when the first network device triggers the MT-SDT paging, the first network device receives the SDT data related to the first terminal apparatus, or the first network device receives the SDT-related paging, the first network device sends the MT-SDT paging for the first terminal apparatus only when the tenth condition and/or the twelfth condition are/is not satisfied.

In a possible implementation of this application, that the first network device sends or needs to send the information related to the multicast paging or the multicast activation notification associated with entering the RRC connected state includes any one or more of the following:

for the multicast service that the first terminal apparatus joins or subscribes to, the first network device sends or needs to send the information related to the multicast paging or the multicast activation notification associated with entering the RRC connected state;
for the multicast service that the first terminal apparatus joins or subscribes to, the first network device has received the multicast data, the paging-related information, or the activation notification-related information sent by the core network device; or
for the multicast service that the first terminal apparatus joins or subscribes to, the first network device has received the paging-related information or the activation notification-related information sent by the another network device.

In a possible implementation of this application, that the first network device sends the information related to the multicast paging or the multicast activation notification associated with entering the RRC connected state includes any one or more of the following:

for the multicast service that the first terminal apparatus joins or subscribes to, the first network device sends the information related to the multicast paging or the multicast activation notification associated with entering the RRC connected state;
for the multicast service that the first terminal apparatus joins or subscribes to, the first network device has received the multicast data, the paging-related information, or the activation notification-related information sent by the core network device; or
for the multicast service that the first terminal apparatus joins or subscribes to, the first network device has received the paging-related information or the activation notification-related information sent by the another network device.

In a possible implementation of this application, the method provided in this embodiment of this application further includes: The first network device receives a fifth message from a second network device. The fifth message includes a fourth identifier of a second terminal apparatus, the fourth identifier of the second terminal apparatus is associated with a radio access network RAN paging, and the fourth identifier of the second terminal apparatus identifies that the second terminal apparatus is a terminal apparatus that receives a multicast service.

In a possible implementation of this application, the method provided in this embodiment of this application further includes: The first network device sends a sixth message to a third network device. The sixth message includes a fourth identifier of a third terminal apparatus, the fourth identifier of the third terminal apparatus is associated with a radio access network RAN paging, and the fourth identifier of the third terminal apparatus identifies that the third terminal apparatus is a terminal apparatus that receives a multicast service.

According to a fourth aspect, an embodiment of this application provides a communication apparatus. The communication apparatus can implement the method in any one of the possible implementations of the first aspect, and therefore can also implement beneficial effects in any one of the possible implementations of the first aspect. The communication apparatus may be a first terminal apparatus, or may be an apparatus that supports the first terminal apparatus in implementing the method in any one of the possible implementations of the first aspect, for example, a chip used in the first terminal apparatus. The communication apparatus can implement the foregoing method by using software, hardware, or hardware executing corresponding software.

In an example, an embodiment of this application provides a communication apparatus. The communication apparatus is the first terminal apparatus or a chip or a chip system used in the first terminal apparatus. The communication apparatus includes a communication unit and a processing unit. The communication unit is configured to receive or send information/data. The processing unit is configured to process the information/data. The communication unit is configured to receive a first paging message. When a first condition and a second condition are satisfied, the processing unit is configured to control the communication unit to initiate RRC connection resume associated with not entering an RRC connected state. The first condition includes: The first paging message includes information about a first identifier of the first terminal apparatus and first indication information. The first identifier of the first terminal apparatus is associated with a RAN paging. The first indication information indicates MT-SDT information. The second condition includes: The first terminal apparatus has not received a multicast paging or a multicast activation notification associated with entering the RRC connected state.

For example, when the communication apparatus is the chip or the chip system in the first terminal apparatus, the processing unit may be a processor, and the communication unit may be a communication interface. For example, the communication interface may be an input/output interface, a pin, a circuit, or the like. The processing unit executes instructions stored in a storage unit, so that the first terminal apparatus implements the communication method described in any one of the possible implementations of the first aspect. The storage unit may be a storage unit (for example, a register or a cache) in the chip, or may be a storage unit (for example, a read-only memory or a random access memory) outside the chip in the first terminal apparatus.

According to a fifth aspect, an embodiment of this application provides a communication apparatus. The communication apparatus can implement the method in any one of the possible implementations of the second aspect, and therefore can also implement beneficial effects in any one of the possible implementations of the second aspect. The communication apparatus may be a first terminal apparatus, or may be an apparatus that supports the first terminal apparatus in implementing the method in any one of the possible implementations of the second aspect, for example, a chip used in the first terminal apparatus. The communication apparatus can implement the foregoing method by using software, hardware, or hardware executing corresponding software.

In an example, an embodiment of this application provides a communication apparatus. The communication apparatus is the first terminal apparatus or a chip or a chip system used in the first terminal apparatus. The communication apparatus includes a communication unit and a processing unit. The communication unit is configured to receive or send information/data. The processing unit is configured to process the information/data. The communication unit is configured to receive a first paging message. When a sixth condition and a seventh condition are satisfied, the processing unit is configured to control the communication unit to skip initiating RRC connection resume associated with an RRC connected state and skip entering an RRC idle state. The sixth condition includes: The first terminal apparatus has received a multicast paging or a multicast activation notification associated with not entering the RRC connected state. The seventh condition includes: The first paging message does not include an identifier of the first terminal apparatus.

For example, when the communication apparatus is the chip or the chip system in the first terminal apparatus, the processing unit may be a processor, and the communication unit may be a communication interface. For example, the communication interface may be an input/output interface, a pin, a circuit, or the like. The processing unit executes instructions stored in a storage unit, so that the first terminal apparatus implements the communication method described in any one of the possible implementations of the second aspect. The storage unit may be a storage unit (for example, a register or a cache) in the chip, or may be a storage unit (for example, a read-only memory or a random access memory) outside the chip in the first terminal apparatus.

According to a sixth aspect, an embodiment of this application provides a communication apparatus. The communication apparatus can implement the method in any one of the possible implementations of the third aspect, and therefore can also implement beneficial effects in any one of the possible implementations of the third aspect. The communication apparatus may be a first network device, or may be an apparatus that supports the first network device in implementing the method in any one of the possible implementations of the third aspect, for example, a chip used in the first network device. The communication apparatus can implement the foregoing method by using software, hardware, or hardware executing corresponding software.

In an example, an embodiment of this application provides a communication apparatus. The communication apparatus is the first network device (for example, an access network device) or a chip or a chip system used in the first network device. The communication apparatus includes a communication unit and a processing unit. The communication unit is configured to receive or send information/data. The processing unit is configured to trigger an MT-SDT paging, receive SDT data related to a first terminal apparatus by using the communication unit, or receive an SDT-related paging by using the communication unit. The communication unit is configured to send an MT-SDT paging for the first terminal apparatus when a ninth condition and/or an eleventh condition are/is satisfied. The ninth condition includes: The first network device does not send or does not need to send information related to a multicast paging or a multicast activation notification associated with entering an RRC connected state. The eleventh condition includes: In first duration before the MT-SDT paging for the first terminal apparatus is sent or before the MT-SDT paging for the first terminal apparatus is sent, the first network device has not sent the information related to the multicast paging or the multicast activation notification associated with entering the RRC connected state.

For example, when the communication apparatus is the chip or the chip system in the first network device, the processing unit may be a processor, and the communication unit may be a communication interface. For example, the communication interface may be an input/output interface, a pin, a circuit, or the like. The processing unit executes instructions stored in a storage unit, so that the first network device implements the communication method described in any one of the possible implementations of the third aspect. The storage unit may be a storage unit (for example, a register or a cache) in the chip, or may be a storage unit (for example, a read-only memory or a random access memory) outside the chip in the first network device.

According to a seventh aspect, an embodiment of this application provides a computer-readable storage medium. The computer-readable storage medium stores a computer program or instructions. When the computer program or instructions are run on a computer, the computer is enabled to perform the communication method described in any one of the first aspect or the possible implementations of the first aspect. The computer may be a first terminal apparatus.

According to an eighth aspect, an embodiment of this application provides a computer-readable storage medium. The computer-readable storage medium stores a computer program or instructions. When the computer program or instructions are run on a computer, the computer is enabled to perform the communication method described in any one of the second aspect or the possible implementations of the second aspect. The computer may be a first terminal apparatus.

According to a ninth aspect, an embodiment of this application provides a computer-readable storage medium. The computer-readable storage medium stores a computer program or instructions. When the computer program or instructions are run on a computer, the computer is enabled to perform the communication method described in any one of the third aspect or the possible implementations of the third aspect. The computer may be a first network device.

According to a tenth aspect, an embodiment of this application provides a computer program product including instructions. When the instructions are run on a computer, the computer is enabled to perform the communication method described in the first aspect or the possible implementations of the first aspect.

According to an eleventh aspect, an embodiment of this application provides a computer program product including instructions. When the instructions are run on a computer, the computer is enabled to perform the communication method described in the second aspect or the possible implementations of the second aspect.

According to a twelfth aspect, an embodiment of this application provides a computer program product including instructions. When the instructions are run on a computer, the computer is enabled to perform the communication method described in the third aspect or the possible implementations of the third aspect.

According to a thirteenth aspect, an embodiment of this application provides a communication apparatus, configured to implement various methods in the possible designs of either of the first aspect or the second aspect. The communication apparatus may be the foregoing first terminal apparatus, a device including the foregoing first terminal apparatus, or a component (for example, a chip) used in the first terminal apparatus. The communication apparatus includes a corresponding module or unit for implementing the foregoing method. The module or unit may be implemented by using hardware, software, or hardware executing corresponding software. The hardware or the software includes one or more modules or units corresponding to the foregoing functions. It should be understood that the communication apparatus described in the thirteenth aspect may further include a bus and a memory. The memory is configured to store code and data. Optionally, at least one processor, a communication interface, and the memory are coupled to each other.

According to a fourteenth aspect, an embodiment of this application provides a communication apparatus, configured to implement the method in the possible designs of the third aspect. The communication apparatus may be the foregoing first network device, a device including the foregoing first network device, or a component (for example, a chip) used in the first network device. The communication apparatus includes a corresponding module or unit for implementing the foregoing method. The module or unit may be implemented by using hardware, software, or hardware executing corresponding software. The hardware or the software includes one or more modules or units corresponding to the foregoing functions.

It should be understood that the communication apparatus described in the fourteenth aspect may further include a bus and a memory. The memory is configured to store code and data. Optionally, at least one processor, a communication interface, and the memory are coupled to each other.

According to a fifteenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in any one of the first aspect or the possible designs of the first aspect. For example, the communication apparatus may be a first terminal apparatus or a chip used in the first terminal apparatus.

According to a sixteenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in any one of the second aspect or the possible designs of the second aspect. For example, the communication apparatus may be a first terminal apparatus or a chip used in the first terminal apparatus.

According to a seventeenth aspect, an embodiment of this application provides a communication apparatus. The communication apparatus includes at least one processor. The at least one processor is coupled to a memory. When the communication apparatus runs, the processor executes computer-executable instructions or a program stored in the memory, to enable the communication apparatus to perform the method in any one of the third aspect or the possible designs of the third aspect. For example, the communication apparatus may be a first network device or a chip used in the first network device.

It should be understood that the memory described in any one of the fifteenth aspect to the seventeenth aspect may be replaced with a storage medium. This is not limited in embodiments of this application.

In a possible implementation, the memory described in any one of the fifteenth aspect to the seventeenth aspect may be a memory inside the communication apparatus. Certainly, the memory may be alternatively located outside the communication apparatus, but the at least one processor can still execute the computer-executable instructions or the program stored in the memory.

According to an eighteenth aspect, an embodiment of this application provides a communication apparatus. The communication apparatus includes one or more modules, configured to implement the method in any one of the first aspect, the second aspect, and the third aspect. The one or more modules may be corresponding to the steps in the method in any one of the first aspect, the second aspect, and the third aspect.

According to a nineteenth aspect, an embodiment of this application provides a chip system. The chip system includes a processor, and the processor is configured to read and execute a computer program stored in a memory, to perform the method in any one of the first aspect or the possible implementations of the first aspect. Optionally, the chip system may be a single chip or a chip module including a plurality of chips. Optionally, the chip system further includes the memory, and the memory is connected to the processor through a circuit or a wire. Optionally, the chip system further includes a communication interface. The communication interface is configured to communicate with a module other than the chip.

According to a twentieth aspect, an embodiment of this application provides a chip system. The chip system includes a processor, and the processor is configured to read and execute a computer program stored in a memory, to perform the method in any one of the second aspect or the possible implementations of the second aspect. Optionally, the chip system may be a single chip or a chip module including a plurality of chips. Optionally, the chip system further includes the memory, and the memory is connected to the processor through a circuit or a wire. Optionally, the chip system further includes a communication interface. The communication interface is configured to communicate with a module other than the chip.

According to a twenty-first aspect, an embodiment of this application provides a chip system. The chip system includes a processor, and the processor is configured to read and execute a computer program stored in a memory, to perform the method in any one of the third aspect or the possible implementations of the third aspect. Optionally, the chip system may be a single chip or a chip module including a plurality of chips. Optionally, the chip system further includes the memory, and the memory is connected to the processor through a circuit or a wire. Optionally, the chip system further includes a communication interface. The communication interface is configured to communicate with a module other than the chip.

According to a twenty-second aspect, an embodiment of this application provides a communication system. The communication system includes a first terminal apparatus and a fourth network device. The first terminal apparatus is configured to perform the method in any one of the first aspect or the second aspect, or the possible implementations of the first aspect or the second aspect. The fourth network device is configured to send a first paging message to the first terminal apparatus.

According to a twenty-third aspect, an embodiment of this application provides a communication system. The communication system includes a first network device. The first network device is configured to perform the method in any one of the third aspect or the possible implementations of the third aspect.

Any apparatus, computer storage medium, computer program product, chip, or communication system provided above is configured to perform the corresponding method provided above. Therefore, for beneficial effects that can be achieved by the apparatus, computer storage medium, computer program product, chip, or communication system, refer to the beneficial effects of the corresponding solution in the corresponding method provided above. Details are not described herein again.

## BRIEF DESCRIPTION OF DRAWINGS

FIG. 1 is a schematic flowchart of an inter-base station paging according to an embodiment of this application;
FIG. 2A is a diagram of an architecture of a communication system according to an embodiment of this application;
FIG. 2B is a diagram of an architecture of another communication system according to an embodiment of this application;

FIG. 3A is a diagram of an architecture of a base station according to an embodiment of this application;

FIG. 3B is a diagram of an architecture of another base station according to an embodiment of this application;

FIG. 4 is a diagram of a structure of a communication device according to an embodiment of this application;

FIG. 5 is a schematic interaction flowchart of a communication method according to an embodiment of this application;

FIG. 6 is a schematic interaction flowchart of another communication method according to an embodiment of this application;

FIG. 7A is a schematic interaction flowchart of still another communication method according to an embodiment of this application;

FIG. 7B is a schematic interaction flowchart of yet another communication method according to an embodiment of this application;

FIG. 8A is a schematic interaction flowchart of still yet another communication method according to an embodiment of this application;

FIG. 8B is a schematic interaction flowchart of a further communication method according to an embodiment of this application;

FIG. 9 is a diagram of a structure of a communication apparatus according to an embodiment of this application; and

FIG. 10 is a diagram of a structure of a chip according to an embodiment of this application.

## DESCRIPTION OF EMBODIMENTS

The following describes technical solutions in embodiments of this application with reference to accompanying drawings in embodiments of this application. In descriptions in embodiments of this application, "/" represents "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

Moreover, the terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In embodiments of this application, a term "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of the term "example", "for example", or the like is intended to present a related concept in a specific manner for ease of understanding.

It should be understood that in this application, "at least one item (piece)" means one or more. "A plurality of" means two or more. "At least two items (pieces)" means two, three, or more. A term "and/or" describes an association relationship for describing associated objects and represents that three relationships may exist. For example, "A and/or B" may represent the following three cases: Only A exists, only B exists, and both A and B exist. A and B each may be in a singular or plural form. A character "/" generally indicates an "or" relationship between associated objects. "At least one of the following items (pieces)" or a similar expression thereof means any combination of these items, including a singular item (piece) or any combination of plural items (pieces). For example, at least one item (piece) of a, b, or c may represent a; b; c; a and b; a and c; b and c; or a, b, and c, where a, b, and c each may be in a singular or plural form. Both "when ..." and "if" mean that corresponding processing is performed in an objective situation, are not intended to limit time, do not require a determining action during implementation, and do not mean that there are other limitations.

Before embodiments of this application are described, related nouns used in this application are first interpreted.

(I) RRC state

In an NR system, a user equipment (User Equipment, UE) may have any one or more of the following three states: an RRC connected state (RRC_CONNECTED state), an RRC idle state (RRC_IDLE state), and an RRC inactive state (RRC_INACTIVE state). For example, the RRC inactive state may also be referred to as an RRC inactive mode.

For example, after the UE accesses a network and sets up an RRC connection to a serving base station, the UE is in the RRC connected state. In this case, the UE can normally exchange data and signaling with the serving base station.

For example, for the UE in the RRC idle state, the serving base station releases context information of the UE, and a long time is needed for the UE to enter the RRC connected state from the RRC idle state.

The RRC inactive state is an intermediate state between the RRC connected state and the RRC idle state.

For example, the UE in the RRC inactive state initiates RRC connection resume (for example, may send an RRC connection resume request message), to attempt to enter the RRC connected state. In comparison with a process in which the UE enters the RRC connected state from the RRC idle state, a lower delay is needed for the UE to enter the RRC connected state from the RRC inactive state.

(II) Paging (Paging)

For example, a purpose of paging is to allow a network to reach to UEs in an RRC_IDLE state and an RRC_INACTIVE state by using a paging message (paging message), and/or notify UEs in an RRC_IDLE state, an RRC_INACTIVE state, and an RRC_CONNECTED state of system message changes and ETWS/CMAS indications by using a short message.

For example, the paging message may be sent on a physical downlink shared channel (Physical Downlink Shared Channel, PDSCH). For example, the short message may be directly sent on a physical downlink control channel (Physical Downlink Control Channel, PDCCH) (that is, downlink control information (downlink control information, DCI)).

For example, a UE in an RRC_IDLE state may receive a paging triggered by a core network (core network, CN). A UE in an RRC_INACTIVE state may receive a paging triggered by the CN and/or a paging triggered by a RAN. When the UE receives the paging initiated by the RAN, the UE starts an RRC connection resume procedure, and determines a resume cause (resumeCause) based on an AI (Access Identity) value configured by an upper layer. When the UE in the RRC_INACTIVE state receives the paging initiated by the CN, the UE transitions to the RRC_IDLE state and initiates an RRC connection setup. This part of content describes a unicast-related paging. In addition, a multicast-related paging is described in the following.

For example, a RAN paging can be understood as a paging initiated by the RAN.

For example, a CN paging can be understood as a paging initiated by the CN.

For example, a paging occasion in embodiments of this application may include one or more radio frames, subframes, slots, and the like. This is not limited.

For example, a time domain resource in embodiments of this application may be a time interval, like a radio frame, a subframe, a slot (slot), a symbol, or a mini-slot (mini-slot). This is not limited.

For example, there may be one or more PFs in one discontinuous reception (discontinuous reception, DRX) cycle, and there may be one or more paging occasions (paging occasions, POs) in each PF.

For example, from a perspective of a monitoring paging by a UE, currently, when DRX is configured for the UE in the RRC idle state or the inactive state, the UE monitors one PO in each DRX cycle (cycle) to save energy. One PO may include a group of PDCCH monitoring occasions (monitoring occasions). A paging frame (PF, Paging Frame) may be a radio frame, and may include one or more POs or a start point of one or more POs.

For example, generally, for the UE in the RRC idle state or the RRC inactive state, the UE wakes up once (that is, performs a monitoring paging) in a PO corresponding to the UE in each paging cycle, and monitors scheduling information of a paging message and a short message (short message).

For example, downlink control information (downlink control information, DCI) corresponding to the paging message is scrambled by using a paging radio network temporary identifier (paging radio network temporary identifier, P-RNTI).

For example, the PO may be determined based on an identifier (for example, UE_ID) of the UE. For example, the PF may be determined according to the following formula:

$$(SFN+PF\_offset) \bmod T=(T \operatorname{div} N)*(UE\_ID \bmod N) \qquad (\text{formula } 1)$$

For example, an index (index (i_s)) of the PO may be obtained according to the following formula:

$$i\_s=floor(UE\_ID/N) \bmod Ns \qquad (\text{formula } 2)$$

The UE may determine, by using i_s, the PO corresponding to the UE in the PF.

For example, meanings of parameters in the foregoing formulas are as follows:

(1) T represents a DRX cycle of the UE.
(2) N represents a quantity of PFs in the DRX cycle.
(3) Ns represents a quantity of POs in one PF.

(4) UE_ID is, for example, 5th generation (5th generation, 5G)-system or service or short (system or service (or serving) or short, S)-temporary mobile subscription identifier (temporary mobile subscription identifier, TMSI) mod 1024, that is, UE_ID is obtained by calculating 5G-S-TMSI mod constant 1. The constant 1 is 1024, 4096, 8192, 32768, or the like. mod represents a modulo operation. If the UE does not have a 5G-S-TMSI, for example, when the UE has not registered with a network, the UE needs to use UE_ID=0.

(5) PF_offset represents an offset (offset) used to determine the PF.

For example, parameter values such as N, Ns, and PF_offset may be broadcast by the network in system information (for example, a system information block 1 (system information block, SIB1)).

For DRX cycles T of UEs, shortest DRX cycles that can be used by the UE in the RRC idle state and the UE in the RRC inactive state may be determined according to the following rules. For example, the UE in the RRC idle state uses the shorter of the following DRX cycles a and b, and the UE in the RRC inactive state uses the shortest DRX cycle among the following a, b, and c:

a. default DRX cycle broadcast in a system message (for example, the SIB1);

b. UE-specific (specific) DRX cycle negotiated between the UE and the core network; and

c. UE-specific DRX cycle sent by the network (for example, the RAN) to the UE.

(III) Radio access network-based notification area (RAN-based Notification Area, RNA)

For example, if a UE transitions from an RRC connected state to an RRC inactive state, a serving base station may configure an RNA for the UE, and the UE may move within the RNA without notifying the serving base station.

For example, if the UE moves out of the RNA, an RNA update procedure is initiated. If the network needs to send data to the UE, a paging procedure may be initiated in the RNA, so that the UE enters the RRC connected state from the RRC inactive state.

(IV) Multicast (Multicast) and unicast

For example, a multicast service mentioned in embodiments of this application may be a multimedia broadcast multicast service (multimedia broadcast multicast service, MBMS in LTE) or a multicast and broadcast service (multicast and broadcast service, MBS) in a new radio (new radio, NR) system. The MBS is introduced by 3GPP to effectively utilize resources of a mobile communication network. In the mobile communication network, the MBS provides a point-to-multipoint service in which a data source sends data to a plurality of users, to implement network resource sharing and improve utilization of resources, especially air interface resources. The NR MBS supports multicast and broadcast.

In embodiments of this application, "multicast" may be replaced with a noun "multi-cast" or the like. Correspondingly, a multicast service may also be replaced with a multi-cast service, and an identifier of the multicast service may also be replaced with an identifier of a multi-cast service.

For example, broadcast (Broadcast) may be used to provide a same service and/or same content data to all terminal apparatuses in a geographic area at the same time. Broadcast (broadcast) may be targeted for all terminal apparatuses in an area.

For example, multicast may be used to provide a same service and/or same content data to a group of dedicated terminal apparatuses at the same time (that is, not all terminal apparatuses within a coverage area are authorized to receive data).

For example, multicast may be targeted for a group of specific terminal apparatuses, and the terminal apparatuses may need to perform a "group joining procedure".

Correspondingly, unicast can be understood as providing a same service and/or same content data to one terminal apparatus at the same time. Unicast can be understood as follows: If one piece of data needs to be sent to a plurality of devices, the data needs to be separately sent to each device.

It should be noted that in this application, an identifier may include/be replaced with/be understood as information, and is not necessarily an identifier.

It should be noted that in this application, multicast service activation may include/be replaced with/be understood as multicast session activation or MBS session activation.

It should be noted that in this application, a multicast service may include/be replaced with/be understood as a multicast session, an MBS session, or an MBS service.

For example, a unicast-related paging or a unicast paging may include a RAN paging and/or a CN paging.

For example, a multicast service has a corresponding multicast session. The multicast session has an active state and an inactive state. For a UE that has joined a multicast session, when the multicast session is deactivated and the UE has no unicast service, the UE may enter an RRC idle state, or may enter an RRC inactive state. When the multicast session is activated, a network device needs to send a multicast session activation notification (or referred to as a multicast activation notification) to notify the UE. At present, the network device may send the multicast activation notification by sending a paging. For example, the paging message may include an identifier of a multicast service (for example, an MBS identifier (identifier, ID)), to indicate that the multicast service is activated. This part of content describes a multicast/MBS-related paging.

For example, if the multicast service is activated, the network device may send a paging message to notify that the multicast service is activated. The paging message may include the identifier of the multicast service, and the identifier of the multicast service may be considered as a multicast activation notification. After receiving the paging message, the UE determines that the multicast service is activated. At present, the UE can receive the multicast service in the RRC inactive state. For example, after receiving the multicast activation notification, the UE may enter a connected state; or the UE may not enter an RRC connected state, but may detect/receive the multicast service in the RRC inactive state. For example, whether the UE can detect/receive the multicast service in the RRC inactive state or whether the UE needs to enter the RRC connected state may be determined by the UE based on an indication in the paging message (for example, an indication of a per multicast service), paging DCI, or another message, or may be determined by the UE based on information or an indication in an MCCH change notification, DCI that schedules an MCCH message, or an MCCH message (for example, based on whether the MCCH message includes configuration information or PTM configuration information of the multicast service).

For example, the network device may send a multicast configuration (for example, a point-to-multipoint (point-to-multipoint, PTM) configuration) before or when the UE enters the RRC inactive state, and the UE can receive the multicast service in the RRC inactive state based on the PTM configuration. For example, the network device may send the PTM configuration to the UE by using a dedicated message. For example, the dedicated message is an RRC release (release) message, and is used to release the UE to the RRC inactive state. In this case, if the UE receives the multicast activation notification in the RRC inactive state, the UE can detect/receive the multicast service in the RRC inactive state. For another example, the UE can detect an MBS control channel (MBS control channel, MCCH) regardless of whether the UE is in the RRC connected state, the RRC inactive state, or the RRC idle state, and the access network device may send PTM configuration to the UE through the MCCH. In this case, if the UE receives the multicast activation notification in the RRC inactive state, the UE can detect the MCCH to receive the PTM configuration. After receiving the PTM configuration, the UE detects/receives the multicast service in the RRC inactive state based on the PTM configuration.

(V) SDT small data transmission

To resolve a problem of excessively high overheads caused by transmitting small data by a UE in an RRC_CONNECTED state, the UE may transmit small data without entering the RRC_CONNECTED state. This data transmission mechanism is small data transmission (small data transmission, SDT).

For example, in embodiments of this application, data less than a preset value may be referred to as small data. For example, the preset value may be set as required, for example, may be 500 bytes or 300 bytes. A network device and a UE may determine, based on a data label or a data type, whether data is small data. Specifically, the network device and the UE may negotiate the data label or the data type based on a data size. For example, the data label may include big data or small data. For another example, data whose data type is heartbeat packet, instant message, or periodic data is small data, and data whose data type is file, video, or audio is big data.

For example, an SDT transmission-related paging may be an SDT paging. A UE in an RRC inactive state may proactively initiate SDT transmission, namely, MO-SDT transmission. For example, the UE in the RRC inactive state may also perform SDT transmission based on an indication of the network device, namely, MT-SDT transmission. For example, if the network device determines that the UE in the RRC inactive state needs to be paged to perform small data transmission, the network device may send a paging message including an MT-SDT paging to the UE in the RRC inactive state. After the UE receives the paging message including the MT-SDT paging, the UE may perform, in the RRC inactive state, data transmission with the network device.

An Xn interface transmission process of a RAN paging is a process in which the access network device requests another access network device to page the UE. For example, events that trigger the access network device to initiate a RAN paging for the terminal apparatus in the RRC inactive state may include the following event e1, event e2, and event e3. Alternatively, when any one of the following event e1, event e2, or event e3 is satisfied, a last serving access network device (for example, a serving gNB) of the terminal apparatus pages the terminal apparatus in a cell corresponding to an RNA, or may send a paging message (for example, XnAP RAN Paging) to a neighboring access network device (if the neighboring access network device is included in the RNA).

Event e1: The last serving access network device has received downlink data for the terminal apparatus from a core network device (for example, a UPF), or has received downlink UE-related signaling (other than a terminal apparatus context release command (UE Context Release Command) message) from a core network device (for example, an AMF).

Event e2: The last serving access network device has received the terminal apparatus context release command (UE Context Release Command) message.

Event e3: The last serving access network device has received an NG RESET message.

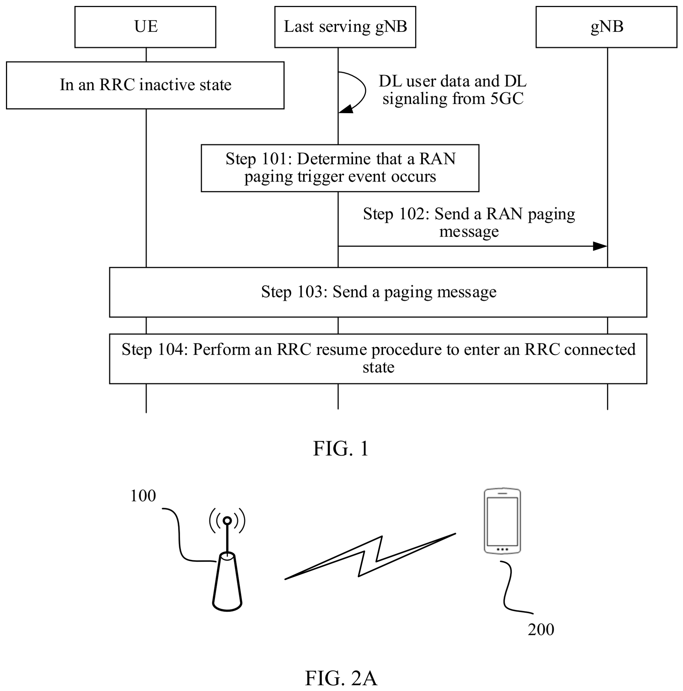

For example, FIG. 1 shows paging transmission over an Xn interface according to an embodiment of this application. FIG. 1 shows a related transmission process.

Step 101: A last serving gNB determines that a RAN paging trigger event occurs. For example, the last serving gNB has received DL user data, DL signaling, and the like from 5GC.

Step 102: The last serving gNB triggers a RAN paging. For example, the last serving gNB sends a RAN paging message to a gNB.

Step 103: The gNB sends a paging message to page a UE.

For example, the gNB pages the UE by using an I-RNTI.

Step 104: If the UE successfully receives the paging message, the UE attempts to enter an RRC connected state.

The base station sends the paging to the UE by using DCI scrambled by using a P-RNTI, where the DCI includes a short message indicator (Short Message Indicator).

The short message indicator indicates whether scheduling information of the paging message exists in the DCI, and/or whether a short message (Short Message) exists in the DCI.

For example, a size of the short message indicator may be 2 bits (bits). For content of the short message indicator, refer to Table 1.

Table 1 Short message indicator

| Bit field | Short message indicator |
|---|---|
| 00 | Reserved (Reserved) |
| 01 | The DCI includes only the scheduling information of the paging message (Only scheduling information for Paging is present in the DCI). |
| 10 | The DCI includes only the short message (Only short message is present in the DCI). |
| 11 | The DCI includes the short message and the scheduling information of the paging message (Both scheduling information for Paging and short message are present in the DCI). |

At present, a network device may send a multicast activation notification (which may be referred to as, for example, a multicast-related paging) by sending a paging message. For example, the paging message includes information about an identifier of a multicast service (the identifier of the multicast service may also be referred to as an MBS identifier (Identifier, ID)). After a terminal apparatus receives the paging message, if the terminal apparatus needs to enter an RRC connected state to receive the multicast service, the terminal apparatus in an RRC inactive state may initiate RRC connection resume to enter the RRC connected state. In addition, the network device may also use the paging message to notify the terminal apparatus to perform MT-SDT transmission in the RRC inactive state. As a result, a new situation arises: A paging message may include both a multicast-related paging for the terminal apparatus (or a multicast-related paging, and the terminal apparatus needs to enter the RRC connected state to receive the multicast service) and an MT-SDT transmission-related paging for the terminal apparatus. In this case, handling performed after the terminal apparatus receives the MT-SDT transmission-related paging may be different from handling performed after the terminal apparatus receives the multicast-related paging. Therefore, when a same paging message includes two different types of pagings, there is no effective method for performing handling by the terminal apparatus at present. For example, after the terminal apparatus receives the MT-SDT transmission-related paging, the terminal apparatus may initiate RRC connection resume associated with not entering an RRC connection. After the terminal apparatus receives the multicast-related paging (or the multicast-related paging, and the terminal apparatus needs to enter the RRC connected state to receive the multicast service), the terminal apparatus may initiate RRC connection resume associated with entering the RRC connection. When the terminal apparatus receives an MT-SDT transmission-related paging and a multicast-related paging (or a multicast-related paging, and the terminal apparatus needs to enter the RRC connected state to receive the multicast service) in a paging message, if the terminal apparatus performs handling according to the handling performed after receiving the MT-SDT transmission-related paging (or if the terminal apparatus initiates RRC connection resume associated with not entering the RRC connection), the terminal apparatus cannot receive the multicast service by entering the connected state. Consequently, receiving of the multicast service is affected. Based on this, an embodiment of this application provides a communication method to resolve the problem. The following describes, based on the foregoing content, the solutions provided in this application.

Based on this, an embodiment of this application provides a communication method to resolve the problem. The following describes, based on the foregoing content, the solutions provided in this application.

FIG. 2A is a diagram of an architecture of a communication system according to an embodiment of this application. As shown in FIG. 2A, the communication system includes a network device 100 and one or more terminal apparatuses 200. The network device 100 and the terminal apparatus 200 may communicate with each other.

For example, the network device 100 may send downlink data to the terminal apparatus 200, and configure a transmission resource for the terminal apparatus 200. For example, the transmission resource may be a CG resource, a common random access channel (Random Access Channel, RACH) resource, or an SDT RACH resource. The terminal apparatus 200 may send uplink data to the network device 100.

In an example, when the terminal apparatus 200 is in an RRC inactive state, the network device 100 may send a paging message (for example, the following first paging message or second paging message) to the terminal apparatus 200. The terminal apparatus 200 may receive the paging message from the network device 100.

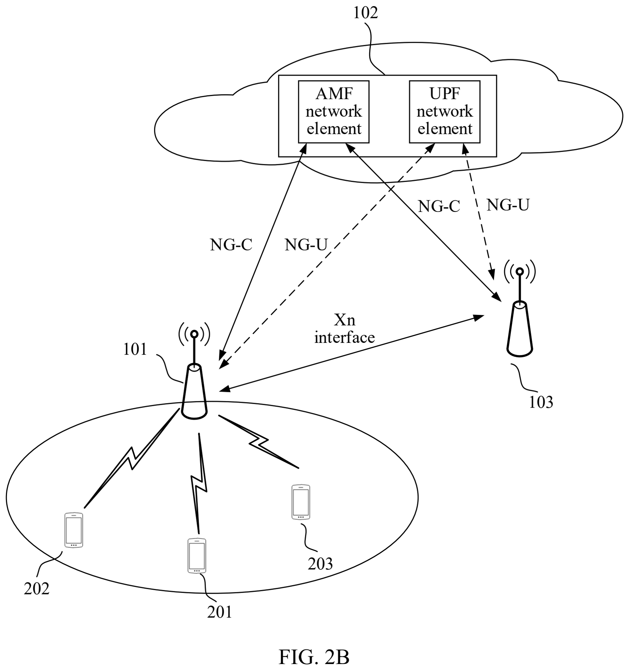

As shown in FIG. 2B, a communication method provided in embodiments of this application can be applied to a wireless communication system, and the wireless communication system may include a terminal apparatus and a network device. The terminal apparatus 200 in FIG. 2A may be any terminal apparatus in FIG. 2B (for example, a terminal apparatus 201, a terminal apparatus 202, or a terminal apparatus 203 shown in FIG. 2B). The network device 100 in FIG. 2A may be an access network device in FIG. 2B (for example, a base station 101 or a base station 103 in FIG. 2B), or may be a core network device in FIG. 2B (for example, a core network device 102 in FIG. 2B). The following describes, with reference to FIG. 2B, the wireless communication system to which embodiments of this application are applicable.

The technical solutions provided in embodiments of this application can be applied to a universal mobile telecommunications system (universal mobile telecommunications system, UMTS); can be applied to a 4th generation mobile communication technology (the 4th generation, 4G) system, for example, a long term evolution (long term evolution, LTE) system, an LTE frequency division duplex (frequency division duplex, FDD) system, or an LTE time division duplex (time division duplex, TDD) system; can be applied to a 5G system, for example, an NR system, an NG-RAN (Next Generation Radio Access Network, next generation radio access network) system, a public land mobile network (public land mobile network, PLMN) system, a non-public network (Non-Public Network, NPN), a stand-alone non-public network (Stand-alone Non-Public Network, SNPN), or a public network integrated non-public network (Public Network Integrated Non-Public Network, PNI-NPN); or can be applied to a 5.5G system, a next generation mobile communication system (for example, 6G), a future evolved communication system, or another similar communication system. This is not specifically limited.

The technical solutions provided in embodiments of this application are applicable to a low frequency band scenario (for example, sub-6 GHz), or are applicable to a high frequency band scenario (for example, above 6 GHz). This is not specifically limited. The technical solutions provided in embodiments of this application can be applied to an MBS scenario or an SDT scenario, can be applied to a device-to-device (device-to-device, D2D) scenario, for example, an NR-D2D scenario, or can be applied to a vehicle-to-everything (vehicle-to-everything, V2X) scenario, for example, an NR-V2X scenario. For example, the technical solutions can be applied to an internet of vehicles, for example, V2X or vehicle-to-vehicle (vehicle-to-vehicle, V2V), or can be applied to intelligent driving, advanced driver assistance systems, connected and intelligent vehicles, or other fields.

The terminal apparatus described in FIG. 2A and FIG. 2B may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may be a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a terminal in a form of a handheld device, a wearable device, a computing device, a portable device, a vehicle-mounted device, or the like, a smartphone, smart glasses, a terminal device in a 5G network, a terminal in a future evolved public land mobile network (public land mobile network, PLMN), or the like. This is not limited in embodiments of this application.

In addition, the terminal apparatus may be deployed on land, including an indoor device, an outdoor device, a handheld device, or a vehicle-mounted device; the terminal apparatus may be deployed on water (for example, on a ship); or the terminal apparatus may be deployed in the air (for example, on an airplane, a balloon, or a satellite). The terminal apparatus may be specifically a mobile phone (mobile phone), a tablet computer (pad), a computer with wireless receiving and sending functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal apparatus may be alternatively a communication chip having a communication module, a vehicle having a communication function, a vehicle-mounted device (for example, an in-vehicle communication apparatus or an in-vehicle communication chip), or the like.

The network device in this embodiment of this application may be an access network device (or referred to as an access network station), or may be a core network device. The following separately provides descriptions.

In a first case, the network device may be an access network device (or referred to as an access network station).

When the network device is an access network device, the network device may be further connected to a core network (core network, CN) device. The access network device is a device that provides a network access function, for example, a radio access network (radio access network, RAN) or a base station. The network device may specifically include a base station (base station, BS) (for example, a RAN base station), or include a base station, a radio resource management device configured to control the base station, and the like. The network device may further include a relay station (relay device), an access point, a gNB in a future 5G network, a base station in a future evolved PLMN network, an NR base station, or the like. The network device may be a wearable device or a vehicle-mounted device. Alternatively, the network device may be a communication chip having a communication module.

For example, the network device includes but is not limited to: a next generation NodeB (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, C-RAN) system, a base station controller (base station controller, BSC), a home NodeB (for example, a home evolved NodeB or a home NodeB, HNB), a baseband unit (baseband unit, BBU), a transmission reception point (transmission reception point, TRP), a transmission point (transmission point, TP), a mobile switching center, a base transceiver station (base transceiver station, BTS) in a global system for mobile communication (global system for mobile communication, GSM) or code division multiple access (code division multiple access, CDMA) network, a NodeB (NodeB, NB) in wideband code division multiple access (wideband code division multiple access, WCDMA), an evolved (evolved) NB (eNB or eNodeB) in LTE, a gNB in a future 5G network, an access network device in a future evolved PLMN network, a wearable device, or a vehicle-mounted device.

In a second case, the network device may be a core network device.

The core network device may be configured to provide a core network service for a terminal apparatus that accesses the network device. The core network device may be corresponding to different devices in different systems. For example, in 3G, the core network device may be corresponding to a serving general packet radio service (general packet radio service, GPRS) support node (serving GPRS support node, SGSN) and/or a gateway GPRS support node (gateway GPRS Support Node, GGSN). In 4G, the core network device may be corresponding to a mobility management entity (mobility management entity, MME) and/or a serving gateway (serving gateway, S-GW). In 5G, the core network device may be corresponding to an access and mobility management function (access and mobility management function, AMF), a session management function (session management function, SMF), or a user plane function (user plane function, UPF).

A 5G network is used as an example to describe the system architecture shown in FIG. 2B. As shown in FIG. 2B, the access network device (the access network device may also be referred to as a next generation radio access network (next generation radio access networks, NG-RAN) node) may include a gNB and an ng-eNB. The gNB may be, for example, the base station 101 in FIG. 2B. The ng-eNB may be, for example, the base station 103 in FIG. 2B. The gNB and the ng-eNB are connected to each other through an Xn interface.

The access network device may be connected to the core network device through an NG interface. For example, the access network device may be connected to an AMF network element through an NG-C interface, and connected to a UPF network element through an NG-U interface. The NG-C interface may also be referred to as a control plane interface between the NG-RAN and 5GC. The NG-U interface may also be referred to as a user plane interface between the NG-RAN and 5GC.

Because a future access network may be implemented by using a cloud radio access network (cloud radio access network, C-RAN) architecture, a possible manner is to divide a protocol stack architecture and functions of a conventional base station into two parts: a central unit (central unit, CU) and a distribution unit (distributed unit, DU). Actual deployment manners of the CU and the DU are flexible. For example, CU parts of a plurality of base stations are integrated together to form a large-scale functional entity.

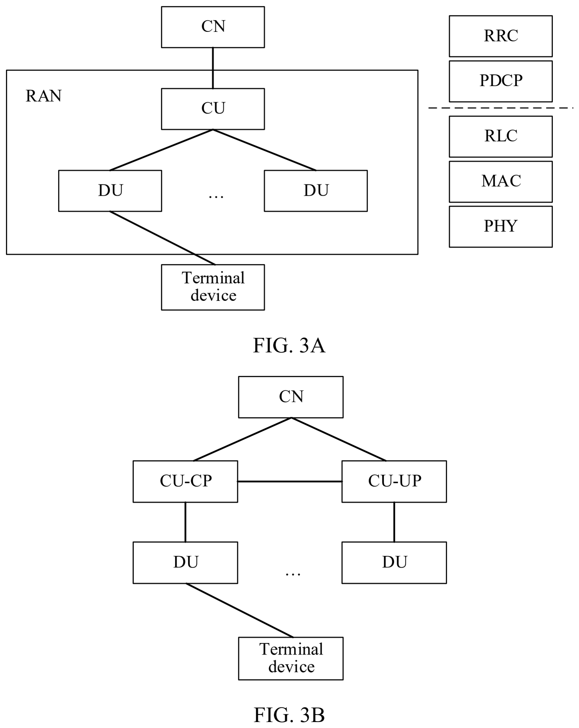

FIG. 3A is a diagram of a network architecture according to an embodiment of this application. As shown in FIG. 3A, the network architecture includes a core network (core network, CN) device and an access network (for example, a radio access network (radio access network, RAN)) device. The RAN device includes a baseband apparatus and a radio frequency apparatus. The baseband apparatus may be implemented by one node, or may be implemented by a plurality of nodes. The radio frequency apparatus may be separated from the baseband apparatus and deployed remotely, or may be integrated into the baseband apparatus, or part of the radio frequency apparatus may be deployed remotely and another part may be integrated into the baseband apparatus. For example, in an LTE communication system, a RAN device (eNB) includes a baseband apparatus and a radio frequency apparatus. The radio frequency apparatus may be remotely arranged relative to the baseband apparatus (for example, a remote radio unit (radio remote unit, RRU) is remotely arranged relative to a baseband processing unit (building baseband unit, BBU)). The RAN device is implemented by one node, and the node is configured to implement functions of protocol layers such as an RRC layer, a PDCP layer, an RLC layer, and a MAC layer. For another example, in an evolved structure, the baseband apparatus may include a central unit (central unit, CU) and a distributed unit (distributed unit, DU), and a plurality of DUs may be controlled by one CU.

As shown in FIG. 3A, a CU and a DU may be arranged based on protocol layers of a radio network. For example, functions of a packet data convergence protocol (packet data convergence protocol, PDCP) layer and above are set on the CU, and functions of protocol layers below the PDCP layer, for example, a radio link control (radio link control, RLC) layer and a medium access control (medium access control, MAC) layer, are set on the DU.

Such arrangement at the protocol layer is merely an example. Arrangement may be alternatively performed at other protocol layers such as the RLC layer, so that functions of the RLC layer and above are set on the CU, and functions of protocol layers below the RLC layer are set on the DU. Alternatively, arrangement is performed within a protocol layer. For example, some functions of the RLC layer and functions of the protocol layers above the RLC layer are set on the CU, and remaining functions of the RLC layer and the functions of the protocol layers below the RLC layer are set on the DU. Alternatively, arrangement may be performed in another manner. For example, arrangement is performed based on a delay. A function whose processing time needs to meet a delay requirement is set on the DU, and a function whose processing time does not need to meet the delay requirement is set on the CU.

In addition, the radio frequency apparatus may not be disposed in the DU but is deployed remotely, or may be integrated into the DU, or part of the radio frequency apparatus may be deployed remotely and another part may be integrated into the DU. This is not limited herein.

Moreover, refer to FIG. 3B. In comparison with the architecture shown in FIG. 3A, a control plane (control plane, CP) and a user plane (user plane, UP) of the CU may be separated and implemented by using different entities: a CU control plane entity (CU-CP entity) and a CU user plane entity (CU-UP entity).

In the foregoing network architecture, signaling generated by the CU may be sent to a terminal apparatus through a DU, or signaling generated by the terminal apparatus may be sent to the CU through the DU. The DU may transparently transmit the signaling to the terminal apparatus or the CU by directly encapsulating the signaling at a protocol layer without parsing the signaling. In the following embodiments, if such signaling is transmitted between the DU and the terminal apparatus, sending or receiving of the signaling by the DU involves this scenario. For example, signaling at the RRC or PDCP layer is finally processed as signaling at a physical layer (physical layer, PHY) and then sent to the terminal apparatus, or is converted from signaling received from the PHY layer. In such an architecture, it may also be considered that the signaling at the RRC or PDCP layer is sent by the DU, or sent by the DU and the radio frequency apparatus.

In the foregoing embodiment, the CU is classified as a network device in the RAN. Alternatively, the CU may be classified as a network device in a CN. This is not limited herein.

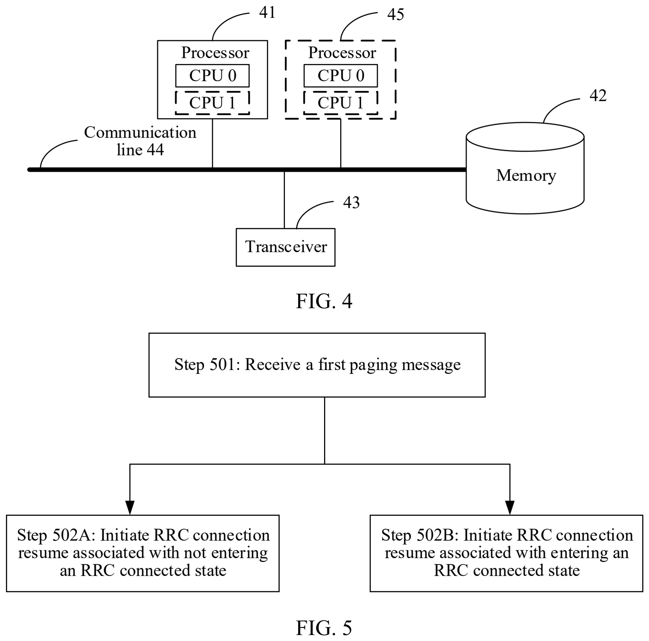

FIG. 4 is a diagram of a hardware structure of a communication device according to an embodiment of this application. For hardware structures of the terminal apparatus and the network device in embodiments of this application, refer to the structure shown in FIG. 4. The communication device includes a processor 41, a communication line 44, and at least one transceiver (descriptions are provided merely by using an example in which a transceiver 43 is included in FIG. 4).

The processor 41 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 44 may include a path for transmitting information between the foregoing components.

The transceiver 43 is an apparatus using any transceiver or the like, and is configured to communicate with another device or a communication network, for example, an Ethernet, a radio access network (radio access network, RAN), a wireless local area network (wireless local area network, WLAN).

Optionally, the communication device may further include a memory 42.

The memory 42 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible to a computer. However, this is not limited thereto. The memory may exist independently, and is connected to the processor through the communication line 44. Alternatively, the memory may be integrated with the processor.

The memory 42 is configured to store computer-executable instructions for performing the solutions in this application, and the processor 41 controls execution of the solutions. The processor 41 is configured to execute the computer-executable instructions stored in the memory 42, to implement communication methods provided in the following embodiments of this application.

Optionally, the computer-executable instructions in this embodiment of this application may also be referred to as application program code. This is not specifically limited in embodiments of this application.

During specific implementation, in an embodiment, the processor 41 may include one or more CPUs, for example, a CPU 0 and a CPU 1 in FIG. 4.

During specific implementation, in an embodiment, the communication device may include a plurality of processors, for example, the processor 41 and a processor 45 in FIG. 4. Each of the processors may be a single-core processor (single-CPU), or may be a multi-core processor (multi-CPU). The processor herein may be one or more devices, circuits, and/or processing cores configured to process data (for example, computer program instructions).

In embodiments of this application, a specific structure of an entity for performing a communication method is not specially limited in embodiments of this application, provided that the entity can run a program that records code for performing the communication method in embodiments of this application, to perform communication according to the communication method in embodiments of this application. For example, an entity for performing a communication method provided in embodiments of this application may be a functional module that is in a first terminal apparatus and that can invoke and execute the program, or may be a communication apparatus used in the first terminal apparatus, for example, a chip, a chip system, or an integrated circuit. The chip, the chip system, or the integrated circuit may be disposed inside the first terminal apparatus, or may be independent of the first terminal apparatus. This is not limited in embodiments of this application.

FIG. 5 is a schematic flowchart of a communication method according to an embodiment of this application. The method includes the following steps.

Step 501: A first terminal apparatus receives a first paging message.

For example, the first terminal apparatus may receive the first paging message sent by a fourth network device. For example, the fourth network device may be an access network device, for example, a base station. For instance, as shown in FIG. 2A, the first terminal apparatus may be the terminal apparatus 200 or a chip in the terminal apparatus 200. For instance, the fourth network device may be the network device 100 shown in FIG. 2A.

For example, in step 501, the first terminal apparatus may be in an RRC inactive state.

For example, the fourth network device may send the first paging message to the first terminal apparatus in the following manner: For example, the fourth network device enables downlink control information (downlink control information, DCI) (for example, DCI scrambled by using a P-RNTI) carried on a physical downlink control channel (physical downlink control channel, PDCCH) to carry scheduling information of the first paging message.

For example, "carry" in this application may include/be replaced with "include".

For example, the first paging message in this application may include/be replaced with another name, for example, a ninth message.

After step 501, the first terminal apparatus may perform the following step 502A or step 502B.

Step 502A: The first terminal apparatus initiates RRC connection resume associated with not entering an RRC connected state.

For example, if a first condition and a second condition are satisfied, the first terminal apparatus may perform step 502A.

Optionally, the first condition may include: The first terminal apparatus has received an MT-SDT paging.

Optionally, the first condition may include one or more pieces of content used by the first terminal apparatus to determine to perform SDT transmission in the RRC inactive state.

For example, "has received" in this application may include/be replaced with "has obtained".

For example, the first condition may include: The first paging message includes information about a first identifier of the first terminal apparatus and first indication information.

For example, if the first paging message includes the first identifier of the first terminal apparatus and the first indication information, it may indicate that this paging includes an MT-SDT paging, or this paging is an MT-SDT paging.

For example, the first identifier of the first terminal apparatus is associated with a RAN paging.

For example, if the first paging message includes the first identifier of the first terminal apparatus, it may indicate that this paging is a RAN paging, or this paging can be understood as a paging initiated by a RAN.

For example, the information about the first identifier of the first terminal apparatus may include some or all of information about the first identifier of the first terminal apparatus. For example, the information about the first identifier of the first terminal apparatus may be some bits of the first identifier of the first terminal apparatus, or all bits of the first identifier of the first terminal apparatus.

For example, a third message sent by a fifth network device to the first terminal apparatus may include the information about the first identifier of the first terminal apparatus.

The third message is used to indicate/command RRC connection release or RRC connection suspension (for example, suspension).

For example, the third message may be an RRCRelease message.

For example, a fourth message sent by the first terminal apparatus to a sixth network device may include the information about the first identifier of the first terminal apparatus.

The fourth message is used to request to resume a suspended (for example, suspended) RRC connection or perform an RNA update.

For example, the fourth message may be an RRCResumeRequest1 message or an RRCResumeRequest message.

It should be noted that any one or more of the fourth network device, the fifth network device, and the sixth network device may be a same network device, or may be different network devices. This is not limited in embodiments of this application.

For example, the fifth network device is an access network device.

For example, the sixth network device is an access network device.

For example, a size of the first identifier of the first terminal apparatus may be 40 bits.

For example, the first identifier of the first terminal apparatus identifies a suspended (for example, suspended) UE context of the first terminal apparatus, or identifies a UE context of the first terminal apparatus.

For example, the first identifier of the first terminal apparatus may include any one or more of the following: a fullI-RNTI, a fullI-RNTI of the first terminal apparatus, a fullI-RNTI stored in the first terminal apparatus, an I-RNTI (Inactive RNTI), an I-RNTI of the first terminal apparatus, and an I-RNTI stored in the first terminal apparatus.

For example, the first indication information may indicate/include mobile terminated (mobile terminated, MT)-small data transmission (small data transmission, SDT) information.

For example, "the first indication information may indicate/include the MT-SDT information" may indicate that the first terminal apparatus may perform, in the RRC inactive state, communication (for example, SDT transmission) with a network device, and does not need to enter the RRC connected state.

For example, the first indication information may explicitly indicate the MT-SDT information to the first terminal apparatus. For example, the first indication information may be an MT-SDT indication or an MT-SDT paging indication. Alternatively, the first indication information may implicitly indicate the MT-SDT information to the first terminal apparatus. For example, the first indication information may include an indication associated with the RRC inactive state and a data type or a data label. For example, the data type or data label may include/be small data. For example, the indication associated with the RRC inactive state may include an RRC inactive state indication.

Optionally, the second condition may include one or more pieces of content used by the first terminal apparatus to determine that the first terminal apparatus receives a multicast service without needing to enter the RRC connected state. Alternatively, the second condition may include one or more pieces of content used by the first terminal apparatus to determine to receive a multicast service in the RRC inactive state. Alternatively, the second condition may include one or more pieces of content used to indicate that the first terminal apparatus has not received a multicast paging or a multicast activation notification associated with the RRC connected state. Alternatively, the second condition may include one or more pieces of content used to indicate that the first terminal apparatus has received a multicast paging or a multicast activation notification associated with the RRC inactive state.

For example, "has not received" in this application may include/be replaced with "has not obtained".

For example, "has received" in this application may include/be replaced with "has obtained".

For example, the second condition may include: The first terminal apparatus has not received a multicast paging or a multicast activation notification associated with entering the RRC connected state.

Optionally, that the first terminal apparatus has not received the multicast paging or the multicast activation notification associated with entering the RRC connected state may include: For a first multicast service or for a multicast service (for example, all multicast services) that the first terminal apparatus joins or subscribes to, the first terminal apparatus has not received the multicast paging or the multicast activation notification associated with entering the RRC connected state.

For example, the second condition may include/be replaced with any one or more of a condition 1, a condition 2, and a condition 3.

Condition 1: The first paging message does not include information about an identifier of the first multicast service or the multicast service (for example, some or all multicast services) that the first terminal apparatus joins or subscribes to.

For example, the identifier of the first multicast service is associated with the first multicast service. For example, the identifier of the first multicast service identifies the first multicast service.

For example, the first multicast service may include the multicast service (for example, some or all multicast services) that the first terminal apparatus joins or subscribes to. For example, the first multicast service may include one or more multicast services.

For example, that the first paging message does not include the information about the identifier of the first multicast service may include: The first paging message does not carry information about an identifier of any multicast service. Alternatively, for example, that the first paging message does not include the identifier of the first multicast service may include: None of identifiers of all multicast services that the first terminal apparatus joins/subscribes to match an identifier of a multicast service carried in the first paging message.

For example, "match" may include/be replaced with "the same as".

For example, "not carry" in this application may include/be replaced with "not include".

For example, an identifier of a multicast service may include any one or more of the following: a temporary mobile group identity (temporary mobile group identity, TMGI), a network identifier (Network Identifier, NID), a public land mobile network (Public Land Mobile Network, PLMN) ID, a stand-alone non-public network (Stand-alone Non-Public Network, SNPN) ID, a non-public network (Non-Public Network, NPN) ID, an MBS service identifier (MBS service ID), a multicast service identifier, a radio network temporary identifier (for example, a group radio network temporary identifier (group radio network temporary identifier, G-RNTI) or a G-CS-RNTI) used to schedule an MBS service/a multicast service, a multicast session identifier, an MBS session identifier (MBS session ID), a protocol data unit (protocol data unit, PDU) session ID used to transmit a multicast service, and the like.

For example, information about an identifier of a multicast service may explicitly indicate the identifier of the multicast service, or may implicitly indicate the identifier of the multicast service. For example, the information about the identifier of the multicast service may include any one or more of the following: a public land mobile network (Public Land Mobile Network, PLMN) identity (index), a non-public network (stand-alone non-public network, SNPN) index, an NPN index, an MBS service identifier, a multicast service identifier, and the like.

For example, information about an identifier of a multicast service may include/be replaced with/be understood as information about the multicast service.

For example, an identifier of a multicast service may include/be replaced with/be understood as information about the multicast service.

For example, the identifier of the first multicast service or information about an identifier of a multicast service may include/be replaced with/be understood as information about the first multicast service.

For example, a multicast service may include/be replaced with/be understood as a multicast session, an MBS session, or an MBS service.

For example, multicast may include/be replaced with/be understood as MBS, broadcast, or multicast.

Condition 2: The first paging message includes an identifier of the first multicast service or the multicast service (for example, some or all multicast services) that the first terminal apparatus joins or subscribes to, and the first terminal apparatus has received second indication information.

For example, the second indication information indicates that the first terminal apparatus receives a multicast service (for example, the first multicast service) without needing to enter the RRC connected state. Alternatively, for example, the second indication information is associated with not entering the RRC connected state. Alternatively, for example, the second indication information is not associated with the RRC connected state. Alternatively, for example, the second indication information is associated with the RRC inactive state.

For example, that the first paging message includes the identifier of the first multicast service may mean that an identifier of a multicast service carried in the first paging message matches the identifier of the first multicast service.

For example, that the first terminal apparatus has received the second indication information may include: The first paging message carries the second indication information; or the first terminal apparatus has received an eighth message (for example, dedicated signaling, a broadcast message, or system information), and the eighth message carries the second indication information.

For example, "the first terminal apparatus has received the eighth message" may include: The first terminal apparatus in the RRC connected state has received the eighth message (for example, the third message) sent by a network device (for example, the fifth network device); or the first terminal apparatus in the RRC inactive state has received the eighth message (for example, an MBS control channel (MBS Control Channel, MCCH) message) sent by a network device (for example, the fifth network device).

For example, that the first terminal apparatus has received the second indication information includes: The first paging message includes the second indication information.

For example, the eighth message may include/be replaced with the third message.

For example, the eighth message may include/be replaced with the MCCH message.

Optionally, the second indication information is associated with the first terminal apparatus.

Optionally, the second indication information is associated with the first multicast service or a multicast service.

Condition 3: The first paging message includes information about an identifier of the first multicast service or the multicast service (for example, some or all multicast services) that the first terminal apparatus joins or subscribes to, and the first terminal apparatus has not received third indication information.

For example, the third indication information indicates that the first terminal apparatus needs to enter the RRC connected state to receive a multicast service. Alternatively, for example, the third indication information is associated with entering the RRC connected state. Alternatively, for example, the third indication information is associated with the RRC connected state. Alternatively, for example, the third indication information is not associated with the RRC inactive state.

For example, that the first terminal apparatus has not received the third indication information may include: The first paging message does not include the third indication information; the first terminal apparatus has received an eighth message (for example, dedicated signaling, a broadcast message, or system information), and the eighth message does not include the third indication information; or the first terminal apparatus has not received an eighth message (for example, dedicated signaling, a broadcast message, or system information), and the eighth message includes the third indication information.

For example, "the first terminal apparatus has not received the eighth message" may include: The first terminal apparatus in the RRC connected state has not received the eighth message (for example, the third message) sent by a network device (for example, the fifth network device); or the first terminal apparatus in the RRC inactive state has not received the eighth message (for example, an MBS control channel (MBS Control Channel, MCCH) message) sent by a network device (for example, the fifth network device).

For example, that the first terminal apparatus has not received the third indication information includes: The first paging message does not include the third indication information.

Optionally, the third indication information is associated with the first terminal apparatus.

Optionally, the third indication information is associated with the first multicast service or a multicast service.

For example, for the multicast service (for example, all multicast services) that the first terminal apparatus joins or subscribes to, different multicast services may satisfy/correspond to different conditions (for example, any one or more of the condition 1, the condition 2, and the condition 3). For example, for the multicast service (for example, all multicast services) that the first terminal apparatus joins or subscribes to, some multicast services may satisfy/correspond to the condition 1, and some multicast services may satisfy/correspond to the condition 2. For example, for the multicast service (for example, all multicast services) that the first terminal apparatus joins or subscribes to, some multicast services may satisfy/correspond to the condition 1, and some multicast services may satisfy/correspond to the condition 3.

For example, "satisfy the second condition" may include/be replaced with "not satisfy a third condition".

For example, when the first paging message includes the first identifier of the first terminal apparatus and the first indication information, but does not include the identifier of the first multicast service, it indicates that the fourth network device pages the first terminal apparatus due to unicast or MT-SDT.

For example, after receiving the first paging message, the first terminal apparatus determines whether the first condition and the second condition are satisfied.

For example, after receiving the first paging message, the first terminal apparatus determines content of the first paging message. For example, if the first paging message includes information indicating the MT-SDT, it indicates that the first terminal apparatus can perform SDT transmission without entering the RRC connected state from the RRC inactive state. In addition, if the first terminal apparatus has not received the multicast paging or the multicast activation notification associated with entering the RRC connected state, it indicates that the first terminal apparatus does not need to enter the RRC connected state after receiving the first paging message. Because for the first terminal apparatus, the paging that is indicated in the first paging message to perform SDT transmission in the RRC inactive state does not have a paging conflict with another paging, receiving of a multicast service is not affected even if the first terminal apparatus does not enter the RRC connected state after receiving the first paging message.

For example, "the first terminal apparatus initiates the RRC connection resume associated with not entering the RRC connected state" may include/be replaced with/be understood as: The first terminal apparatus initiates an RRC connection resume procedure, but does not enter the RRC connected state. For example, the first terminal apparatus initiates an RRC resume request message to the fourth network device, where the RRC resume request message may indicate not to resume an RRC connection. For example, the RRC resume request message may include indication information, and the indication information may indicate not to resume the RRC connection.

Optionally, in a possible implementation of this application, the first condition and the second condition are satisfied, and a fifth condition is further satisfied.

For example, if the first terminal apparatus determines that the first condition, the second condition, and the fifth condition are satisfied, the first terminal apparatus performs step 502A.

Optionally, the fifth condition may include one or more pieces of content used by the first terminal apparatus to determine to initiate the RRC connection resume associated with not entering the RRC connected state.

For example, the one or more pieces of content included in the fifth condition are different from the content included in the first condition and/or the second condition.

For example, the fifth condition includes any one or more of a condition A and a condition B.

Condition A: The first terminal apparatus has no uplink service.

Optionally, that the first terminal apparatus has no uplink service may include any one or more of the following: The first terminal apparatus has no uplink data, and an upper layer (for example, a NAS layer) of the first terminal apparatus does not request the RRC connection resume.

For example, that the first terminal apparatus has no uplink data may include: There is no suspended data on a radio bearer (radio bearer, RB) (for example, all RBs) of the first terminal apparatus.

For example, "suspended" may include/be replaced with "to-be-transmitted".

For example, the first terminal apparatus has no uplink service. If the first paging message received by the first terminal apparatus satisfies the first condition, or the first paging message satisfies the first condition and the second condition, the first terminal apparatus performs step 502A.

Condition B: The first terminal apparatus has an uplink service, and a condition for initiating MO-SDT is satisfied.

For example, the condition B may include/be replaced with the condition for initiating the MO-SDT is satisfied.

Optionally, that the first terminal apparatus has an uplink service may include any one or more of the following: The first terminal apparatus has uplink data, and an upper layer (for example, a NAS layer) of the first terminal apparatus requests the RRC connection resume.

For example, that the first terminal apparatus has uplink data may include: There is suspended data on an RB (for example, one or more RBs) of the first terminal apparatus.

Optionally, the condition for initiating the MO-SDT may include any one or more of a condition B1, a condition B2, a condition B3, a condition B4, and a condition B5.

Condition B1: The upper layer (for example, the NAS layer) of the first terminal apparatus requests the RRC connection resume.

Condition B2: A SIB1 includes SDT-related information (for example, sdt-ConfigCommon).

For example, the SIB1 is a SIB1 of a current cell. For example, the first terminal apparatus obtains the SIB1.

For example, the SDT-related information includes any one or more of the following: information about a first RSRP threshold, information about a first SR delay timer, information about a first data volume threshold, and information about a first t319a timer.

For example, the first RSRP threshold may be used to determine whether SDT can be initiated.

For example, the first SR delay timer may be used to control triggering and/or sending of an SR. For example, the first SR delay timer is associated with an SDT-related logical channel.

For example, the first data volume threshold may be used to determine whether SDT can be initiated.

For example, the first t319a timer may be used to detect an SDT failure.

Condition B3: SDT-related configuration information (for example, sdt-Config) is configured for the first terminal apparatus.

For example, that SDT-related configuration information (for example, sdt-Config) is configured for the first terminal apparatus may include: The third message received by the first terminal apparatus may include the SDT-related configuration information (for example, sdt-Config). For example, the third message may be sent by the fifth network device to the first terminal apparatus.

For example, the SDT-related configuration information may include any one or more of the following: ROHC information corresponding to an RB configured for the SDT, information about the RB configured for the SDT (for example, information about an RB ID), indication information indicating whether an SRB2 is configured for the SDT, and configuration information related to configured grant (configured grant, CG)-SDT (for example, a physical layer configuration and/or a MAC layer configuration).

Condition B4: All suspended UL data is mapped to the radio bearer (radio bearer, RB) configured for the SDT.

Condition B5: A lower layer (for example, a MAC layer, an RLC layer, or a PDCP layer) of the first terminal apparatus indicates that a condition for initiating the SDT is satisfied.

Optionally, "the lower layer (for example, the MAC layer, the RLC layer, or the PDCP layer) of the first terminal apparatus indicates that the condition for initiating the SDT is satisfied" may include: Any one or more of a condition B5.1, a condition B5.2, and a condition B5.3 are satisfied.

For example, the condition B5.1 may include: A data volume of suspended UL data on all RBs configured for the SDT is less than or equal to the first data volume threshold.

For example, the condition B5.2 may include: An RSRP of a downlink path loss reference is greater than the first RSRP threshold, or the first RSRP threshold is not configured.

For example, that the first RSRP threshold is not configured may include: The SIB1 or the SDT-related information does not include the information about the first RSRP threshold.

For example, the condition B5.3 may include a condition for initiating the CG-SDT, or a condition for initiating RA-SDT.

For example, the condition for initiating the CG-SDT may include any one or more of the following: The CG-SDT is configured, a TA for the CG-SDT is valid, and an LCH corresponding to an RB having to-be-transmitted data allows a type 1 CG to be used.

For example, that the CG-SDT is configured may include: The CG-SDT is configured on a selected UL carrier.

For example, if SUL is configured for a cell (for example, a current cell or a serving cell), and the RSRP of the downlink path loss reference is less than a second RSRP threshold, the selected UL carrier is an SUL carrier. For example, if no SUL is configured for a cell (for example, a current cell or a serving cell), or the RSRP of the downlink path loss reference is greater than or equal to a second RSRP threshold, the selected UL carrier is an NUL carrier. For example, the second RSRP threshold is related to SUL. For example, the first terminal apparatus selects, based on the second RSRP threshold, a carrier (for example, an SUL carrier or an NUL carrier) for performing random access.

For example, that the TA for the CG-SDT is valid may include: The TA for the CG-SDT is valid at a 1st available CG occasion. For example, the 1st available CG occasion may include: a 1st available CG occasion for initial CG-SDT transmission, or a 1st available CG occasion for initial CG-SDT transmission with a CCCH message.

For example, that the LCH corresponding to the RB having the to-be-transmitted data allows the type 1 CG to be used may include: If the CG-SDT is the type 1 CG, the LCH corresponding to the RB having the to-be-transmitted data allows the type 1 CG to be used.

For example, the condition for initiating the RA-SDT may include any one or more of the following: The condition for initiating the CG-SDT is not satisfied, and a random access resource set for the RA-SDT is configured and may be selected.

For example, that the random access resource set for the RA-SDT is configured may include: The random access resource set for the RA-SDT is configured on the selected UL carrier.

For example, if the condition B5.1, the condition B5.2, and the condition B5.3 are satisfied, the lower layer (for example, the MAC layer, the RLC layer, or the PDCP layer) of the first terminal apparatus indicates that the condition for initiating the SDT is satisfied.

For example, if the condition B1, the condition B2, the condition B3, the condition B4, and the condition B5 are satisfied, the first terminal apparatus determines that the condition for initiating the MO-SDT is satisfied.

In this embodiment, when the first terminal apparatus determines that the first condition, the second condition, and the fifth condition are satisfied, the first terminal apparatus initiates the RRC connection resume associated with not entering the RRC connected state. This can prevent the first terminal apparatus from initiating, when the fifth condition is not satisfied, the RRC connection resume associated with not entering the RRC connected state, and can prevent the first terminal apparatus from failing to perform uplink data transmission normally in the RRC inactive state, thereby helping ensure reliability and quality of UL data transmission.

It can be understood that, if the first terminal apparatus determines that the first condition and the second condition are satisfied but the fifth condition is not satisfied, the first terminal apparatus initiates RRC connection resume associated with entering the RRC connected state. This can ensure that the first terminal apparatus enters the RRC connected state, to ensure UL service transmission.

Optionally, the first terminal apparatus determines whether the second condition is satisfied. If the second condition is satisfied, the first terminal apparatus may perform step 502A; or if the second condition is not satisfied, the first terminal apparatus performs step 502B. For example, when determining that the first condition is satisfied, the first terminal apparatus further needs to determine whether the second condition is satisfied. If the second condition is satisfied, the first terminal apparatus may perform step 502A; or if the second condition is not satisfied, the first terminal apparatus performs step 502B.

Optionally, the first terminal apparatus determines whether the fifth condition is satisfied. If the fifth condition is satisfied, the first terminal apparatus may perform step 502A; or if the fifth condition is not satisfied, the first terminal apparatus performs step 502B. For example, when determining that the first condition is satisfied (or the first condition and the second condition are satisfied), the first terminal apparatus further needs to determine whether the fifth condition is satisfied. If the fifth condition is satisfied, the first terminal apparatus may perform step 502A; or if the fifth condition is not satisfied, the first terminal apparatus performs step 502B.

The foregoing embodiment describes a process in which the first terminal apparatus initiates, if the first condition and the second condition are satisfied after the first terminal apparatus receives the first paging message, the RRC connection resume associated with not entering the RRC connected state.

The following describes a process in which the first terminal apparatus initiates, after receiving the first paging message, the RRC connection resume associated with entering the RRC connected state, that is, step 502B.

Step 502B: The first terminal apparatus initiates the RRC connection resume associated with entering the RRC connected state.

For example, if the third condition is satisfied, the first terminal apparatus may perform step 502B.

For example, if the first condition and the third condition are satisfied, the first terminal apparatus may perform step 502B.

For example, if the first condition and a fourth condition are satisfied, the first terminal apparatus may perform step 502B.

For example, if the first condition, the third condition, and the fourth condition are satisfied, the first terminal apparatus may perform step 502B.

For example, if the first condition and the fourth condition are satisfied, the first terminal apparatus may perform step 502B.

For example, if the second condition and the fourth condition are satisfied, the first terminal apparatus may perform step 502B.

For example, if the third condition and the fourth condition are satisfied, the first terminal apparatus may perform step 502B.

For example, if the first condition, the second condition, and the fourth condition are satisfied, the first terminal apparatus may perform step 502B.

Optionally, the third condition may include one or more pieces of content used by the first terminal apparatus to determine to enter the RRC connected state to receive a multicast service. Alternatively, the third condition may include one or more pieces of content used to indicate that the first terminal apparatus has received the multicast paging or the multicast activation notification associated with the RRC connected state. Alternatively, the third condition may include one or more pieces of content used to indicate that the first terminal apparatus has not received the multicast paging or the multicast activation notification associated with the RRC inactive state.

For example, the third condition may include: The first terminal apparatus has received the multicast paging or the multicast activation notification associated with entering the RRC connected state.

Optionally, that the first terminal apparatus has received the multicast paging or the multicast activation notification associated with entering the RRC connected state may include: For the first multicast service or for the multicast service (for example, some or all multicast services) that the first terminal apparatus joins or subscribes to, the first terminal apparatus has received the multicast paging or the multicast activation notification associated with entering the RRC connected state.

For example, the third condition may include/be replaced with any one or more of a condition 4, a condition 5, and a condition 6.

Condition 4: The first paging message includes the information about the identifier of the first multicast service or the multicast service (for example, some or all multicast services) that the first terminal apparatus joins or subscribes to, and the first terminal apparatus has not received the second indication information.

For example, that the first terminal apparatus has not received the second indication information may include: The first paging message does not carry the second indication information; the first terminal apparatus has received the eighth message (for example, dedicated signaling, a broadcast message, or system information), and the eighth message does not carry the second indication information; or the first terminal apparatus has not received the eighth message, and the eighth message carries the second indication information.

For example, that the first terminal apparatus has not received the second indication information includes: The first paging message does not include the second indication information.

For example, "satisfy the third condition" may include/be replaced with "not satisfy the second condition".

Condition 5: The first paging message includes the information about the identifier of the first multicast service or the multicast service (for example, some or all multicast services) that the first terminal apparatus joins or subscribes to, and the first terminal apparatus has received the third indication information.

For example, that the first terminal apparatus has received the third indication information may include: The first paging message carries the third indication information; or the first terminal apparatus has received the eighth message (for example, dedicated signaling, a broadcast message, or system information), and the eighth message carries the third indication information.

For example, that the first terminal apparatus has received the third indication information includes: The first paging message includes the third indication information.

For descriptions of the second indication information and the third indication information, refer to the descriptions in the foregoing embodiment. Details are not described herein again.

For example, after the first terminal apparatus receives the first paging message, if the first paging message includes the identifier of the first multicast service, and the first terminal apparatus has not received the second indication information or has received the third indication information, the first terminal apparatus may determine that the first terminal apparatus needs to enter the RRC connected state to ensure normal receiving of a multicast service. In this case, the first terminal apparatus may perform step 502B.

In an example, the third indication information may be carried in the first paging message. Alternatively, the third indication information is sent by a network device to the first terminal apparatus when the first terminal apparatus is in the RRC connected state. For example, when the first terminal apparatus is in the RRC connected state, the network device sends first signaling (for example, dedicated signaling) to the first terminal apparatus. The first signaling indicates that the first terminal apparatus has received the multicast paging or a group activation notification and needs to enter the RRC connected state. Optionally, the first signaling is the third indication information. Alternatively, the first signaling includes the third indication information. This is not limited in embodiments of this application.

For example, after the first terminal apparatus initiates, to the fourth network device, the RRC connection resume associated with entering the RRC connected state, if the fourth network device agrees to resume the RRC connection of the first terminal apparatus, the first terminal apparatus may resume the RRC connection to the fourth network device. After the RRC connection is resumed, the first terminal apparatus is in the RRC connected state.

For example, after the first terminal apparatus receives the first paging message, if the first paging message includes the first identifier of the first terminal apparatus and the first indication information, the first paging message includes the identifier of the first multicast service, and the first terminal apparatus has not received the second indication information or has received the third indication information, to ensure that receiving of a multicast service is not affected, the first terminal apparatus needs to enter the RRC connected state to ensure normal receiving of the multicast service. In this case, the first terminal apparatus may perform step 502B.

Optionally, the fourth condition may include one or more pieces of content used by the first terminal apparatus to determine to initiate the RRC connection resume associated with entering the RRC connected state.

For example, the one or more pieces of content included in the fourth condition are different from the content included in the first condition and/or the second condition and/or the fifth condition.

For example, the fourth condition includes: The first terminal apparatus has an uplink service, and the condition for initiating the MO-SDT is not satisfied.

For example, "satisfy the fourth condition" may include/be replaced with "not satisfy the fifth condition".

For example, the first terminal apparatus has an uplink service. If a data volume of the uplink service is large or a data label or a data type of the uplink service is not small data, and the uplink service is not suitable for sending in the RRC inactive state, the first terminal apparatus determines that the condition for initiating the MO-SDT is not satisfied.

For example, after the first terminal apparatus receives the first paging message, if the first paging message includes the first identifier of the first terminal apparatus and the first indication information, and the first terminal apparatus determines that a data volume of a to-be-sent uplink service is greater than a preset threshold (for example, the first data volume threshold), the first terminal apparatus initiates the RRC connection resume associated with entering the RRC connected state, to request to enter the RRC connected state to send the uplink service.

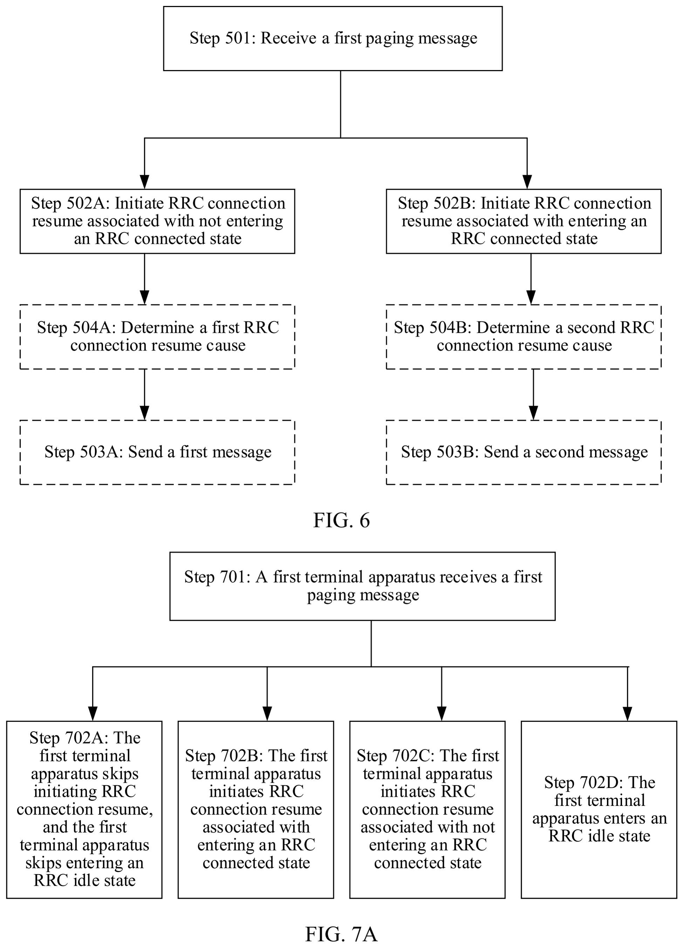

Optionally, after step 502A, as shown in FIG. 6, the first terminal apparatus may perform the following step 503A. Optionally, "the first terminal apparatus initiates the RRC connection resume associated with not entering the RRC connected state" may include: The first terminal apparatus sends a first message.

S503A: The first terminal apparatus sends the first message.

For example, the first terminal apparatus sends the first message to the fourth network device.

For example, the first message is used to request to resume an RRC connection or perform an RNA update. For example, requesting to resume the RRC connection may include/be replaced with requesting to resume a suspended (for example, suspended) RRC connection.

For example, the first message may be an RRC message, for example, an RRCResumeRequest message or an RRCResumeRequest1 message.

It should be noted that after initiating the RRC connection resume, the first terminal apparatus may send the first message, or may not send the first message. This is not limited in embodiments of this application.

It should be noted that a sequence of step 502A and step 503A is not limited in this application.

For example, the first message may include the information about the first identifier of the first terminal apparatus.

It should be noted that the first message and the fourth message are a same message, or may be different. This is not limited in this application.

Optionally, that the first terminal apparatus initiates the RRC connection resume associated with not entering the RRC connected state may include any one or more of a solution 1 to a solution 3.

Solution 1: The first terminal apparatus initiates, by using a CG resource (for example, the CG-SDT), the RRC connection resume associated with not entering the RRC connected state.

Optionally, if the condition for initiating the CG-SDT is satisfied, the first terminal apparatus may perform the solution 1.

For example, when the first terminal apparatus determines that the condition for initiating the CG-SDT is satisfied, the first terminal apparatus may send the first message on the CG resource (for example, the CG-SDT).

Solution 2: The first terminal apparatus initiates, by using a common RACH resource, the RRC connection resume associated with not entering the RRC connected state.

For example, the common RACH resource may include/be replaced with a RACH resource unrelated to the SDT, or a legacy RACH resource.

Optionally, if the condition A is satisfied, or the condition for initiating the CG-SDT is not satisfied and the condition A is satisfied, the first terminal apparatus may perform the solution 2.

For example, when the first terminal apparatus determines that the condition for initiating the CG-SDT is not satisfied and the condition A is satisfied, the first terminal apparatus may send the first message on the common RACH resource.

Optionally, if the first terminal apparatus has both the legacy RACH resource and the CG resource, and the condition for initiating the CG-SDT is satisfied, the first terminal apparatus may choose to initiate, on either the legacy RACH resource or the CG resource, the RRC connection resume associated with not entering the RRC connected state. Alternatively, the first terminal apparatus may preferentially choose to use the CG resource to initiate the RRC connection resume associated with not entering the RRC connected state. Alternatively, the first terminal apparatus may preferentially choose to use the legacy RACH resource to initiate the RRC connection resume associated with not entering the RRC connected state.

Solution 3: The first terminal apparatus initiates, by using an SDT RACH resource, the RRC connection resume associated with not entering the RRC connected state.

For example, the SDT RACH resource may include/be replaced with a RACH resource related to the SDT, or a RACH resource dedicated to the SDT.

Optionally, if the condition B is satisfied, or the condition for initiating the CG-SDT is not satisfied and the condition B is satisfied, the first terminal apparatus may perform the solution 3.

For example, when the first terminal apparatus determines that the condition for initiating the CG-SDT is not satisfied and the condition B is satisfied, the first terminal apparatus may send the first message on the SDT RACH resource.

Optionally, if the first terminal apparatus has both the SDT RACH resource and the CG resource, and the condition for initiating the CG-SDT is satisfied, when the first terminal apparatus has an uplink service and the condition for initiating the MO-SDT is satisfied, the first terminal apparatus may choose to initiate, on either the SDT RACH resource or the CG resource, the RRC connection resume associated with not entering the RRC connected state. Alternatively, the first terminal apparatus may preferentially choose to use the CG resource to initiate the RRC connection resume associated with not entering the RRC connected state. Alternatively, the first terminal apparatus may preferentially choose to use the SDT RACH resource to initiate the RRC connection resume associated with not entering the RRC connected state.

Optionally, this application further includes: The first terminal apparatus performs the following step 504A.

S504A: The first terminal apparatus determines a first RRC connection resume cause.

It should be noted that, for a sequence of step 504A and step 503A, step 504A may be performed before or after step 503A, or step 504A and step 503A may be performed at the same time. This is not limited in this application. For example, step 504A may be performed before step 503A, and the first RRC connection resume cause may be carried in the first message for sending, or the first RRC connection resume cause and the first message are separately sent. In another possible implementation, step 504A may be alternatively performed after step 503A. In this case, the first RRC connection resume cause and the first message are separately sent. In FIG. 6, step 504A is shown before step 503A.

For example, that the first terminal apparatus determines the first RRC connection resume cause may include/be replaced with/be understood as: The first terminal apparatus sets the first RRC connection resume cause.

For example, the RRC connection resume cause may include/be replaced with a resume cause value.

Optionally, the first message may include the first RRC connection resume cause.

Optionally, that the first terminal apparatus determines the first RRC connection resume cause may include any one or more of a solution A1 and a solution A2.

Solution A1: The first terminal apparatus determines the first RRC connection resume cause based on a first policy.

For example, the first policy may include the MT-SDT information.

For example, if the condition A is satisfied, the first terminal apparatus determines the first RRC connection resume cause based on the first policy.

For example, "satisfy the condition A" may include/be replaced with "not satisfy the condition B".

For example, the first terminal apparatus determines that the first RRC connection resume cause is the MT-SDT. For example, the MT-SDT may include/be replaced with MT-data or another name (for example, MT-SDT-related information). This is not limited.

Solution A2: The first terminal apparatus determines the first RRC connection resume cause based on a second policy.

For example, the second policy may include at least one of the MT-SDT information and information about an RRC connection resume cause indicated by an upper layer (for example, the NAS layer).

For example, the RRC connection resume cause indicated by the upper layer may include any one or more of the following: mo-Signaling, mo-Data, mo-VoiceCall, mo-VideoCall, and mo-SMS.

For example, if the condition B is satisfied, the first terminal apparatus determines the first RRC connection resume cause based on the second policy.

For example, "satisfy the condition B" may include/be replaced with "not satisfy the condition A".

For example, if a priority of the MO-SDT is higher than that of the MT-SDT, the second policy includes the information about the RRC connection resume cause indicated by the upper layer.

For example, if a priority of the MO-SDT is lower than that of the MT-SDT, the second policy includes the MT-SDT information.

For example, the first terminal apparatus determines that the first RRC connection resume cause is the MT-SDT or the RRC connection resume cause indicated by the upper layer.

For example, if the second policy includes the MT-SDT information, the first terminal apparatus determines that the first RRC connection resume cause is the MT-SDT.

For example, if the second policy includes the RRC connection resume cause indicated by the upper layer, the first terminal apparatus determines that the first RRC connection resume cause is the RRC connection resume cause indicated by the upper layer.

For example, if the second policy includes the MT-SDT information and the RRC connection resume cause indicated by the upper layer, the first terminal apparatus may determine that the first RRC connection resume cause is the MT-SDT or the RRC connection resume cause indicated by the upper layer.

Optionally, "the first terminal apparatus initiates the RRC connection resume associated with not entering the RRC connected state" may further include: The first terminal apparatus sends the first RRC connection resume cause. For example, the first RRC connection resume cause is used to indicate a reason why the first terminal apparatus initiates the RRC connection resume associated with not entering the RRC connected state.

In an example, the first RRC connection resume cause may be carried in the first message. In this way, occupied resources can be reduced and signaling overheads can be reduced. Alternatively, the first RRC connection resume cause may be sent to a network device by using another message. This is not limited in embodiments of this application.

For example, the first RRC connection resume cause is used to indicate a reason why the first terminal apparatus requests to resume the RRC connection.

Optionally, after step 502B, as shown in FIG. 6, the first terminal apparatus may perform the following step 503B. Optionally, "the first terminal apparatus initiates the RRC connection resume associated with entering the RRC connected state" may include: The first terminal apparatus sends a second message.

Step 503B: The first terminal apparatus sends the second message.

For example, the second message is used to request to resume an RRC connection or perform an RNA update.

For example, the second message may be an RRC message, for example, an RRCResumeRequest message or an RRCResumeRequestl message.

It should be noted that after initiating the RRC connection resume, the first terminal apparatus may send the second message, or may not send the second message. This is not limited in this application.

It should be noted that a sequence of step 502B and step 503B is not limited in this application.

For example, the second message may include the information about the first identifier of the first terminal apparatus.

It should be noted that the second message and the fourth message are a same message, or may be different. This is not limited in this application.

Optionally, this application further includes: The first terminal apparatus performs the following step 504B.

Step 504B: The first terminal apparatus determines a second RRC connection resume cause.

It should be noted that, for a sequence of step 504B and step 503B, step 504B may be performed before or after step 503B, or step 504B and step 503B may be performed at the same time. This is not limited in this application. For example, step 504B may be performed before step 503B, and the second RRC connection resume cause may be carried in the second message for sending, or the second RRC connection resume cause and the second message are separately sent. In another possible implementation, step 504B may be alternatively performed after step 503B. In this case, the second RRC connection resume cause and the second message are separately sent. In FIG. 6, step 504B is shown before step 503B.

For example, that the first terminal apparatus determines the second RRC connection resume cause may include/be replaced with/be understood as: The first terminal apparatus sets the second RRC connection resume cause.

Optionally, the second message may include the second RRC connection resume cause.

Optionally, that the first terminal apparatus determines the second RRC connection resume cause may include any one or more of a solution B1, a solution B2, and a solution B3.

Solution B1: The first terminal apparatus determines the first RRC connection resume cause based on a third policy.

For example, the third policy may include information about an RRC connection resume cause indicated by an upper layer (for example, the NAS layer).

For example, the first terminal apparatus determines that the first RRC connection resume cause is the RRC connection resume cause indicated by the upper layer.

For example, the RRC connection resume cause indicated by the upper layer (for example, the NAS layer) may include any one or more of the following: emergency, high priority access (highPriorityAccess), mobile terminated (Mobile Terminated, MT)-Access, mo-Signaling, mo-Data, mo-VoiceCall, mo-VideoCall, mo-SMS, rna-Update, and multimedia priority service (multimedia priority service, MPS)-priority access (PriorityAccess).

For example, the first terminal apparatus determines the second RRC connection resume cause based on the third policy when the third condition is not satisfied, or when the third condition is not satisfied and the fourth condition is satisfied.

Solution B2: The first terminal apparatus determines the first RRC connection resume cause based on a fourth policy.

For example, the fourth policy may include information about an access identity (Access Identity, AI).

For example, the first terminal apparatus determines the second RRC connection resume cause based on the fourth policy when the fourth condition is not satisfied, or when the third condition is satisfied and the fourth condition is not satisfied.

In a possible implementation, that the first terminal apparatus determines the second RRC connection resume cause based on the access identity may include any one or more of the following:

(1) If the upper layer (for example, the NAS layer) of the first terminal apparatus configures an access identity 1, the second RRC connection resume cause is set to mps-PriorityAccess.
(2) If the upper layer of the first terminal apparatus does not configure an access identity 1, and the upper layer of the first terminal apparatus configures an access identity 2, the second RRC connection resume cause is set to mcs-PriorityAccess.
(3) If the upper layer of the first terminal apparatus does not configure an access identity 1 and an access identity 2, and the upper layer of the first terminal apparatus configures one or more of an access identity 11 to an access identity 15, the second RRC connection resume cause is set to highPriorityAccess.
(4) If the upper layer of the first terminal apparatus does not configure an access identity 1, an access identity 2, and an access identity 11 to an access identity 15, the second RRC connection resume cause is set to mt-Access.

Solution B3: The first terminal apparatus determines the first RRC connection resume cause based on a fifth policy.

For example, the fifth policy may include at least one of information about an access identity (Access Identity, AI) and information about an RRC connection resume cause indicated by an upper layer (for example, the NAS layer).

For example, the first terminal apparatus determines that the first RRC connection resume cause is a cause value determined based on the AI, or the RRC connection resume cause indicated by the upper layer.

For example, the first terminal apparatus determines the second RRC connection resume cause based on the fifth policy when the third condition and the fourth condition are satisfied.

For example, if a priority of the first multicast service is higher than that of the UL service, the fifth policy includes the information about the access identity (Access Identity, AI).

For example, if a priority of the first multicast service is lower than that of the UL service, the fifth policy includes the information about the RRC connection resume cause indicated by the upper layer.

Optionally, the second RRC connection resume cause may be carried in the second message. Certainly, the second RRC connection resume cause may be alternatively carried in a message different from the second message. This is not limited in embodiments of this application.

For example, the second RRC connection resume cause is used to indicate a reason why the first terminal apparatus requests to resume the RRC connection.

According to the solution provided in this embodiment of this application, when the first condition and the third condition are satisfied, the first terminal apparatus initiates the RRC connection resume associated with entering the RRC connected state, so that the first terminal apparatus in the RRC inactive state can enter the RRC connected state to receive data of the first multicast service. This provides a solution to resolve a problem that the first terminal apparatus in the RRC inactive state cannot receive a multicast service by entering the connected state, and ensures receiving of the multicast service.

At present, the network device may send a multicast activation notification (which may be referred to as, for example, a multicast-related paging) by sending a paging message. For example, the paging message includes information about an identifier of a multicast service (the identifier of the multicast service may also be referred to as an MBS identifier (Identifier, ID)). After the terminal apparatus receives the paging message, if the terminal apparatus receives the multicast service without needing to enter the RRC connected state, the terminal apparatus in the RRC inactive state may directly receive the multicast service in the RRC inactive state. In addition, the network device may also use the paging message to page the terminal apparatus due to unicast. As a result, a new situation arises: A paging message may include both a multicast-related paging for the terminal apparatus (or a multicast-related paging, and the terminal apparatus receives the multicast service without needing to enter the RRC connected state) and a unicast-related paging for the terminal apparatus. In this case, handling performed after the terminal apparatus receives the unicast-related paging may be different from handling performed after the terminal apparatus receives the multicast-related paging. Therefore, when a same paging message includes two different types of pagings, there is no effective method for performing handling by the terminal apparatus. For example, after the terminal apparatus receives the unicast-related paging, the terminal apparatus may initiate RRC connection resume associated with not entering an RRC connection, initiate RRC connection resume associated with entering an RRC connection, or return to an RRC idle state to initiate an RRC connection setup. After the terminal apparatus receives the multicast-related paging (or the multicast-related paging, and the terminal apparatus receives the multicast service without needing to enter the RRC connected state), the terminal apparatus may directly receive the multicast service in the RRC inactive state. When the terminal apparatus receives a unicast-related paging and a multicast-related paging (or a multicast-related paging, and the terminal apparatus receives the multicast service without needing to enter the RRC connected state) in a paging message, if the terminal apparatus performs handling according to the handling performed after receiving the multicast transmission related paging (or if the terminal apparatus directly receives the multicast service in the RRC inactive state), the terminal apparatus cannot receive a unicast service. Consequently, receiving of the unicast service is affected. Based on this, an embodiment of this application provides a communication method to resolve the problem. The following describes, based on the foregoing content, the solutions provided in this application.

FIG. 7A is a diagram of a communication method according to an embodiment of this application. The method includes the following steps.

Step 701: A first terminal apparatus receives a first paging message.

For example, in step 701, the first terminal apparatus may be in an RRC inactive state.

For example, for content related to step 701 and content related to the first paging message, refer to the embodiment in FIG. 5 and/or the embodiment in FIG. 6. Details are not described herein again.

After step 701, the first terminal apparatus may perform the following step 702A, step 702B, step 702C, or step 702D.

Step 702A: The first terminal apparatus skips initiating RRC connection resume, and the first terminal apparatus skips entering an RRC idle state.

For example, that the first terminal apparatus skips initiating the RRC connection resume may include any one or more of the following: The first terminal apparatus skips initiating RRC connection resume associated with entering an RRC connected state, the first terminal apparatus skips initiating RRC connection resume associated with not entering the RRC connected state, and the first terminal apparatus skips sending a first message and/or a second message.

For example, that the first terminal apparatus skips entering the RRC idle state may include any one or more of the following: The first terminal apparatus skips initiating an RRC connection setup, and the first terminal apparatus skips sending a tenth message.

For example, step 702A may include/be replaced with any one or more of the following: The first terminal apparatus receives (or directly receives) multicast in the RRC inactive state, and the first terminal apparatus keeps in the RRC inactive state.

For example, receiving multicast may include: receiving (or monitoring) an MCCH message (or a multicast-related MCCH message), and/or receiving (or monitoring) a multicast service (for example, a first multicast service or an activated multicast service).

For example, if a sixth condition and a seventh condition are satisfied, the first terminal apparatus may perform step 702A.

For example, the sixth condition may include: The first terminal apparatus has received a multicast paging or a multicast activation notification associated with not entering the RRC connected state.

Optionally, that the first terminal apparatus has received the multicast paging or the multicast activation notification associated with not entering the RRC connected state may include: For the first multicast service or for a multicast service (for example, some or all multicast services) that the first terminal apparatus joins or subscribes to, the first terminal apparatus has received the multicast paging or the multicast activation notification associated with not entering the RRC connected state.

For example, the sixth condition may include/be replaced with any one or more of a condition 2 and a condition 3.

Optionally, the seventh condition may include any one or more of the following: one or more pieces of content used by the first terminal apparatus to determine that the first terminal apparatus receives a multicast service without needing to enter the RRC connected state, one or more pieces of content used by the first terminal apparatus to determine to receive a multicast service in the RRC inactive state, one or more pieces of content used to indicate that the first terminal apparatus has not received a multicast paging or a multicast activation notification associated with the RRC connected state, one or more pieces of content used to indicate that the first terminal apparatus has received a multicast paging or a multicast activation notification associated with the RRC inactive state, one or more pieces of content used by the first terminal apparatus to determine that the first terminal apparatus does not need to enter the RRC connected state, and one or more pieces of content used by the first terminal apparatus to determine that the first terminal apparatus does not need to perform MT-SDT transmission.

For example, the seventh condition may include a condition (1) and/or a second condition.

For example, the condition (1) may include: The first paging message does not include information about an identifier of the first terminal apparatus, or does not include an identifier of the first terminal apparatus.

For example, the condition (1), or that the first paging message does not include the information about the identifier of the first terminal apparatus may include/be replaced with: For the first terminal apparatus, the first paging message does not include information about a RAN paging (for example, information about a common RAN paging and information about an MT-SDT paging) and information about a CN paging; or the first terminal apparatus has not received a RAN paging (for example, a common RAN paging and an MT-SDT paging) and a CN paging.

For example, the identifier of the first terminal apparatus may include a first identifier of the first terminal apparatus and a second identifier of the first terminal apparatus.

For example, for content related to the condition 2, content related to the condition 3, content related to the first identifier of the first terminal apparatus, and content related to the second condition, refer to the embodiment in FIG. 5 and/or the embodiment in FIG. 6. Details are not described herein again.

For example, the second identifier of the first terminal apparatus is associated with a CN paging.

For example, the second identifier of the first terminal apparatus may be provided/allocated by an upper layer of the first terminal apparatus (for example, a NAS layer of the first terminal apparatus), or the second identifier of the first terminal apparatus may be provided/allocated by an upper layer of the first terminal apparatus (for example, a NAS layer of the first terminal apparatus) for the first terminal apparatus (for example, an AS layer of the first terminal apparatus).

For example, the second identifier of the first terminal apparatus may be provided by a core network device for the first terminal apparatus. It should be noted that the second identifier of the first terminal apparatus may be sent by the core network device to the first terminal apparatus, or may be sent by the core network device to the first terminal apparatus through an access network device. This is not limited in this application.

For example, the second identifier of the first terminal apparatus may identify (for example, uniquely identify) the first terminal apparatus in a tracking area.

For example, a fifth message sent by the first terminal apparatus to a seventh network device may include information about the second identifier of the first terminal apparatus.

It should be noted that a fourth network device and the seventh network device may be a same network device, or may be different network devices. This is not limited in embodiments of this application.

The information about the second identifier of the first terminal apparatus may include some or all of information about the second identifier of the first terminal apparatus. For example, the information about the second identifier of the first terminal apparatus may be some bits of the second identifier of the first terminal apparatus, or all bits of the second identifier of the first terminal apparatus.

The fifth message is used to request to set up an RRC connection.

For example, the fifth message may be an RRCSetupRequest message.

For example, a sixth message sent by the first terminal apparatus to the seventh network device may include the information about the second identifier of the first terminal apparatus.

The sixth message is used to confirm that the RRC connection setup is successfully completed.

For example, the sixth message may be an RRCSetupComplete message.

For example, the second identifier of the first terminal apparatus may include any one or more of the following: a 5G-S-TMSI (5G S-Temporary Mobile Subscription Identifier), a system architecture evolution temporary mobile station identifier (System Architecture Evolution Temporary Mobile Station Identifier, S-TMSI), an international mobile subscriber identity (international mobile subscriber identity, IMSI), and an ng-5G-S-TMSI.

Optionally, "satisfying the sixth condition and the seventh condition" includes: satisfying the sixth condition, satisfying the seventh condition, and satisfying a condition A.

Step 702B: The first terminal apparatus initiates RRC connection resume associated with entering an RRC connected state.

For example, for content related to step 702B, refer to the embodiment in FIG. 5 and/or the embodiment in FIG. 6 (for example, step 502B). Details are not described herein again.

For example, if a third condition is satisfied, the first terminal apparatus may perform step 702B.

For example, if a first condition and the third condition are satisfied, the first terminal apparatus may perform step 702B.

For example, if the first condition and a fourth condition are satisfied, the first terminal apparatus may perform step 702B.

For example, if the first condition, the third condition, and the fourth condition are satisfied, the first terminal apparatus may perform step 702B.

For example, if the first condition and the fourth condition are satisfied, the first terminal apparatus may perform step 702B.

For example, if a second condition and the fourth condition are satisfied, the first terminal apparatus may perform step 702B.

For example, if the third condition and the fourth condition are satisfied, the first terminal apparatus may perform step 702B.

For example, if the first condition, the second condition, and the fourth condition are satisfied, the first terminal apparatus may perform step 702B.

Step 702C: The first terminal apparatus initiates RRC connection resume associated with not entering an RRC connected state.

For example, if a first condition is satisfied, the first terminal apparatus may perform step 702C.

For example, if the first condition and a second condition are satisfied, the first terminal apparatus may perform step 702C.

Optionally, in a possible implementation of this application, the first condition is satisfied, and a fifth condition is further satisfied.

Optionally, in a possible implementation of this application, the first condition and the second condition are satisfied, and the fifth condition is further satisfied.

Step 702D: The first terminal apparatus enters an RRC idle state.

For example, if an eighth condition is satisfied, the first terminal apparatus may perform step 702D.

For example, the eighth condition may include a condition I or a condition II.

Condition I: The first paging message includes an identifier of a first multicast service or a multicast service (for example, some or all multicast services) that the first terminal apparatus joins or subscribes to, and a second identifier of the first terminal apparatus.

Condition II: The first paging message includes a second identifier of the first terminal apparatus.

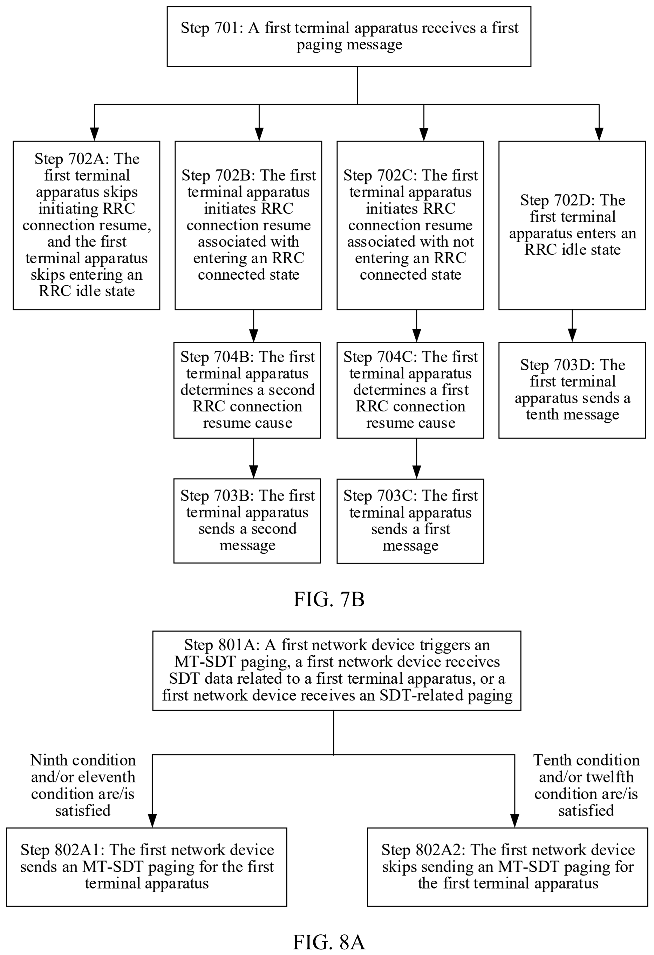

Optionally, after step 702C, as shown in FIG. 7B, the first terminal apparatus may perform the following step 703C. Optionally, "the first terminal apparatus initiates the RRC connection resume associated with not entering the RRC connected state" may include: The first terminal apparatus sends a first message.

Step 703C: The first terminal apparatus sends the first message.

Optionally, that the first terminal apparatus initiates the RRC connection resume associated with not entering the RRC connected state may include any one or more of a solution 1 to a solution 3.

Optionally, this application further includes: The first terminal apparatus performs the following step 704C.

Step 704C: The first terminal apparatus determines a first RRC connection resume cause.

Optionally, that the first terminal apparatus determines the first RRC connection resume cause may include any one or more of a solution A1 and a solution A2.

Optionally, after step 702B, as shown in FIG. 7B, the first terminal apparatus may perform the following step 703B. Optionally, "the first terminal apparatus initiates the RRC connection resume associated with entering the RRC connected state" may include: The first terminal apparatus sends a second message.

Step 703B: The first terminal apparatus sends the second message.

Optionally, this application further includes: The first terminal apparatus performs the following step 704B.

Step 704B: The first terminal apparatus determines a second RRC connection resume cause.

Optionally, that the first terminal apparatus determines the second RRC connection resume cause may include any one or more of a solution B1, a solution B2, and a solution B3.

Optionally, after step 702D, the first terminal apparatus may perform the following step 703D. Optionally, "the first terminal apparatus enters the RRC idle state" may include: The first terminal apparatus sends a tenth message.

Step 703D: The first terminal apparatus sends the tenth message.

The tenth message is used to request to set up an RRC connection.

For example, the tenth message may be an RRC message, for example, an RRCSetupRequest message.

It should be noted that after entering the RRC idle state, the first terminal apparatus may send the tenth message, or may not send the tenth message. This is not limited in this application.

It should be noted that the tenth message and the fifth message may be a same message, or may be different messages. This is not limited in embodiments of this application.

It should be noted that a sequence of step 702D and step 703D is not limited in this application.

For example, the tenth message may include information about the second identifier of the first terminal apparatus.

Optionally, this application further includes: The first terminal apparatus notifies an upper layer (for example, the upper layer is a NAS layer) of the first terminal apparatus.

That the first terminal apparatus notifies the upper layer of the first terminal apparatus may include any one or more of the following:

If the first paging message includes the second identifier of the first terminal apparatus, the first terminal apparatus forwards the second identifier of the first terminal apparatus included in the first paging message to the upper layer of the first terminal apparatus.

If the first paging message includes an access type (access type), the first terminal apparatus forwards the access type (if any) to the upper layer of the first terminal apparatus.

If the first paging message includes an identifier of the first multicast service, the first terminal apparatus forwards the identifier of the first multicast service to the upper layer of the first terminal apparatus.

For example, for content related to the embodiment in FIG. 7A and/or the embodiment in FIG. 7B, refer to the embodiment in FIG. 5 and/or the embodiment in FIG. 6. Details are not described herein again.

According to the solution provided in this embodiment of this application, when the sixth condition and the seventh condition are satisfied, the first terminal apparatus skips initiating the RRC connection resume, and the first terminal apparatus skips entering the RRC idle state. In this way, the first terminal apparatus in the RRC inactive state can initiate the RRC connection setup or RRC connection resume. This provides a solution to resolve a problem that the first terminal apparatus in the RRC inactive state cannot initiate an RRC connection setup or RRC connection resume and then cannot receive a unicast service, and ensures receiving of the unicast service.

For a problem of a conflict between an MT-SDT transmission-related paging and a multicast-related paging (or a multicast-related paging, and the terminal apparatus needs to enter the RRC connected state to receive a multicast service), the foregoing embodiment (for example, the embodiment shown in FIG. 5 and/or the embodiment in FIG. 6) mainly describes handling performed after the first terminal apparatus receives the paging message, and resolves the problem from a terminal apparatus side. The following embodiment describes from a perspective of a network device, and avoids a conflict between the two types of pagings from a network side.

FIG. 8A is a schematic flowchart of a communication method according to an embodiment of this application. The method includes the following steps.

Optionally, in step 801A, a first network device triggers an MT-SDT paging, a first network device receives SDT data related to a first terminal apparatus, or a first network device receives an SDT-related paging.

For example, that the first network device triggers the MT-SDT paging includes: The first network device triggers an MT-SDT paging for the first terminal apparatus.

For example, that the first network device receives the SDT data related to the first terminal apparatus includes: The first network device receives SDT data related to the first terminal apparatus from a core network device.

For example, that the first network device receives the SDT-related paging includes: For the first terminal apparatus, the first network device receives an SDT-related paging (for example, a CN paging) from the core network device; or for the first terminal apparatus, the first network device receives an SDT-related paging (for example, an inter-base station paging) from another network device. For example, the another network device may be an access network device.

After step 801A, the first terminal apparatus may perform the following step 802A1 or step 802A2.

Step 802A1: The first network device sends the MT-SDT paging for the first terminal apparatus.

In a possible implementation, that the first network device sends the MT-SDT paging for the first terminal apparatus includes: The first network device sends the MT-SDT paging for the first terminal apparatus to the first terminal apparatus. For example, the first network device may be an access network device.

In another possible implementation, that the first network device sends the MT-SDT paging for the first terminal apparatus includes: The first network device sends the MT-SDT paging for the first terminal apparatus to a second network device. For example, the first network device may be an access network device, and the second network device may be an access network device. For another example, the first network device may be a CU (or a CU of a first access network device), and the second network device may be a DU (or a DU of the first access network device).

For example, the MT-SDT paging for the first terminal apparatus may include/be replaced with another name, for example, a first message, or information related to the MT-SDT paging for the first terminal apparatus. This is not limited.

For example, the information related to the MT-SDT paging for the first terminal apparatus may include any one or more of the following: information about a second identifier of the first terminal apparatus, information about a first identifier of the first terminal apparatus, first indication information, and a parameter (for example, information about an RSRP threshold and/or information about a data volume threshold) needed to determine MT-SDT.

For example, the information about the second identifier of the first terminal apparatus may be used to calculate a PO. For example, the information about the second identifier of the first terminal apparatus may be UE_ID. For example, UE_ID is obtained by calculating 5G-S-TMSI mod constant 1. For example, the constant 1 is 1024, 4096, 8192, 32768, or the like. For example, a quantity of bits of UE_ID may be 10 bits. For example, the quantity of bits of UE_ID is less than a quantity of bits of a 5G-S-TMSI (for example, 48 bits), so that occupied resources can be reduced.

For example, for content related to FIG. 8A, refer to any one or more of the embodiments in FIG. 5, FIG. 6, FIG. 7A, and FIG. 7B. Details are not described herein again.

For example, if a ninth condition and/or an eleventh condition are/is satisfied, the first network device performs step 802A1.

For example, the ninth condition includes: The first network device does not send or does not need to send information related to a multicast paging or a multicast activation notification associated with entering an RRC connected state.

For example, in this application, the information related to the multicast paging or the multicast activation notification associated with entering the RRC connected state may include/be replaced with the information related to the multicast paging or the multicast activation notification.

For example, the information related to the multicast paging or the multicast activation notification associated with entering the RRC connected state may include any one or more of the following: information about an identifier of a multicast service and information about a second identifier of a terminal apparatus. For example, the information about the second identifier of the terminal apparatus may include information about the second identifier of the terminal apparatus corresponding to the multicast service.

For example, that the first network device does not send or does not need to send the information related to the multicast paging or the multicast activation notification associated with entering the RRC connected state may include any one or more of the following:

(1) For a first multicast service or for a multicast service (for example, all multicast services) that the first terminal apparatus joins or subscribes to, the first network device does not send or does not need to send the information related to the multicast paging or the multicast activation notification associated with entering the RRC connected state.

(2) For a first multicast service or for a multicast service (for example, all multicast services) that the first terminal apparatus joins or subscribes to, the first network device has not received multicast data, paging (for example, CN paging) related information, or activation notification (or activation) related information sent by the core network device.

(3) For a first multicast service or for a multicast service (for example, all multicast services) that the first terminal apparatus joins or subscribes to, the first network device has not received paging (for example, inter-base station paging) related information or activation notification (or activation) related information sent by another network device. For example, the another network device may be an access network device.

For example, "the information related to the multicast paging or the multicast activation notification associated with entering the RRC connected state" and "the information related to the MT-SDT paging" may be corresponding to a same message (for example, a paging message), or may be corresponding to different messages (for example, paging messages). For example, for an air interface paging, the two pieces of information may be corresponding to a same message. For example, for an inter-base station paging, the two pieces of information may be corresponding to different messages (for example, a paging message corresponding to unicast and a paging message corresponding to multicast).

For example, the eleventh condition may include: In first duration before the MT-SDT paging for the first terminal apparatus is sent or before the MT-SDT paging for the first terminal apparatus is sent, the first network device has not sent the information related to the multicast paging or the multicast activation notification associated with entering the RRC connected state.

For example, the first duration may be specified in a protocol, preconfigured, configured, or determined in another manner. This is not limited in this application.

For example, that the first network device has not sent the information related to the multicast paging or the multicast activation notification associated with entering the RRC connected state includes: The first network device has not sent, to the second network device, the information related to the multicast paging or the multicast activation notification associated with entering the RRC connected state; or the first network device has not sent, to the first terminal apparatus, the information related to the multicast paging or the multicast activation notification associated with entering the RRC connected state.

For example, the information related to the multicast paging or the multicast activation notification associated with entering the RRC connected state may include: information that is related to the multicast paging or the multicast activation notification (or activation) associated with entering the RRC connected state and that is specific to the first multicast service or for the multicast service (for example, all multicast services) that the first terminal apparatus joins or subscribes to.

For example, that the first network device has not sent the information related to the multicast paging or the multicast activation notification associated with entering the RRC connected state may include any one or more of the following:

(1) For the first multicast service or for the multicast service (for example, all multicast services) that the first terminal apparatus joins or subscribes to, the first network device has not sent the information related to the multicast paging or the multicast activation notification associated with entering the RRC connected state.

(2) For the first multicast service or for the multicast service (for example, all multicast services) that the first terminal apparatus joins or subscribes to, the first network device has not received the multicast data, the paging (for example, CN paging) related information, or the activation notification (or activation) related information sent by the core network device.

(3) For the first multicast service or for the multicast service (for example, all multicast services) that the first terminal apparatus joins or subscribes to, the first network device has not received the paging (for example, inter-base station paging) related information or the activation notification (or activation) related information sent by the another network device. For example, the another network device may be an access network device.

Step 802A2: The first network device skips sending the MT-SDT paging for the first terminal apparatus.

In a possible implementation, that the first network device skips sending the MT-SDT paging for the first terminal apparatus includes: The first network device skips sending the MT-SDT paging for the first terminal apparatus to the first terminal apparatus. For example, the first network device may be an access network device.

In another possible implementation, that the first network device skips sending the MT-SDT paging for the first terminal apparatus includes: The first network device skips sending the MT-SDT paging for the first terminal apparatus to a second network device. For example, the first network device may be an access network device, and the second network device may be an access network device. For another example, the first network device may be a CU (or a CU of a first access network device), and the second network device may be a DU (or a DU of the first access network device).

For example, if a tenth condition and/or a twelfth condition are/is satisfied, the first network device performs step 802A2. For example, step 802A2 may include/be replaced with: The first network device ignores the MT-SDT paging for the first terminal apparatus.

For example, the tenth condition may include: The first network device sends or needs to send the information related to the multicast paging or the multicast activation notification associated with entering the RRC connected state.

For example, that the first network device sends or needs to send the information related to the multicast paging or the multicast activation notification associated with entering the RRC connected state may include any one or more of the following:

(1) For the first multicast service or for the multicast service (for example, some or all multicast services) that the first terminal apparatus joins or subscribes to, the first network device sends or needs to send the information related to the multicast paging or the multicast activation notification (or activation) associated with entering the RRC connected state.
(2) For the first multicast service or for the multicast service (for example, some or all multicast services) that the first terminal apparatus joins or subscribes to, the first network device has received the multicast data, the paging (for example, CN paging) related information, or the activation notification (or activation) related information sent by the core network device.
(3) For the first multicast service or for the multicast service (for example, some or all multicast services) that the first terminal apparatus joins or subscribes to, the first network device has received the paging (for example, inter-base station paging) related information or the activation notification (or activation) related information sent by the another network device. For example, the another network device may be an access network device.

For example, the twelfth condition may include: In first duration before the MT-SDT paging for the first terminal apparatus is sent or before the MT-SDT paging for the first terminal apparatus is sent, the first network device sends the information related to the multicast paging or the multicast activation notification associated with entering the RRC connected state.

For example, that the first network device sends the information related to the multicast paging or the multicast activation notification associated with entering the RRC connected state includes the following: The first network device sends, to the second network device, the information related to the multicast paging or the multicast activation notification associated with entering the RRC connected state; or the first network device sends, to the first terminal apparatus, the information related to the multicast paging or the multicast activation notification associated with entering the RRC connected state.

For example, that the first network device sends the information related to the multicast paging or the multicast activation notification associated with entering the RRC connected state may include any one or more of the following:

(1) For the first multicast service or for the multicast service (for example, all multicast services) that the first terminal apparatus joins or subscribes to, the first network device sends the information related to the multicast paging or the multicast activation notification associated with entering the RRC connected state.
(2) For the first multicast service or for the multicast service (for example, all multicast services) that the first terminal apparatus joins or subscribes to, the first network device has received the multicast data, the paging (for example, CN paging) related information, or the activation notification (or activation) related information sent by the core network device.
(3) For the first multicast service or for the multicast service (for example, all multicast services) that the first terminal apparatus joins or subscribes to, the first network device has received the paging (for example, inter-base station paging) related information or the activation notification (or activation) related information sent by the another network device. For example, the another network device may be an access network device.

According to the solution provided in this embodiment of this application, the first network device sends the MT-SDT paging for the first terminal apparatus when the ninth condition and/or the eleventh condition are/is satisfied; and/or the first network device skips sending the MT-SDT paging for the first terminal apparatus when the tenth condition and/or the twelfth condition are/is satisfied. In this way, a problem of a conflict between an MT-SDT transmission-related paging and a multicast-related paging (or a multicast-related paging, and the terminal apparatus needs to enter the RRC connected state to receive a multicast service) can be avoided on a network device side (for example, the first network device), so that the first terminal apparatus in an RRC inactive state can enter the RRC connected state to receive data of the first multicast service. This provides a solution to resolve a problem that the first terminal apparatus in the RRC inactive state cannot receive a multicast service by entering the connected state, and ensures receiving of the multicast service.

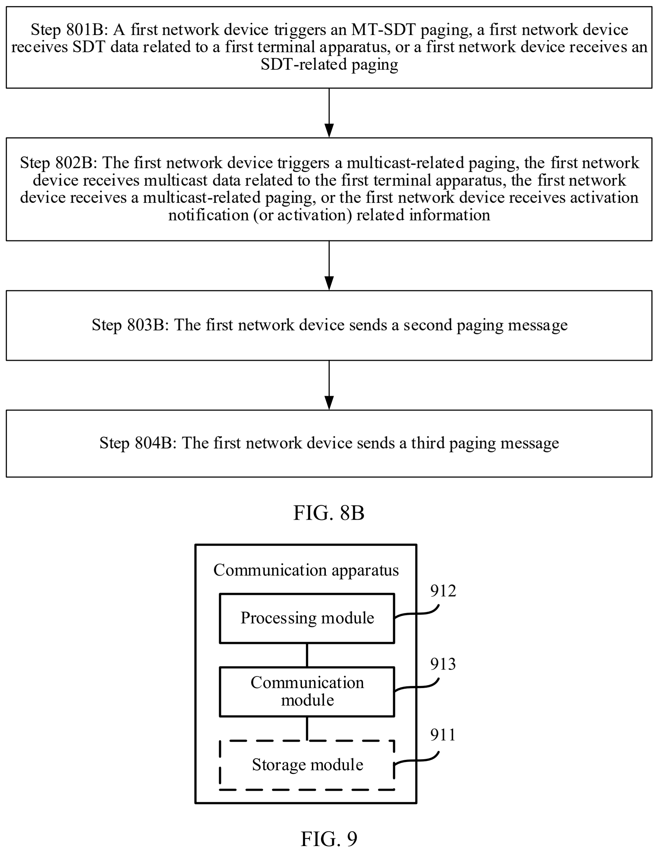

FIG. 8B is a schematic flowchart of a communication method according to an embodiment of this application. The method includes the following steps.

Optionally, in step 801B, a first network device triggers an MT-SDT paging, a first network device receives SDT data related to a first terminal apparatus, or a first network device receives an SDT-related paging.

For example, for content related to FIG. 8B, refer to any one or more of the embodiments in FIG. 5, FIG. 6, FIG. 7A, FIG. 7B, and FIG. 8A. Details are not described herein again.

Optionally, in step 802B, the first network device triggers a multicast-related paging, the first network device receives multicast data related to the first terminal apparatus, the first network device receives a multicast-related paging, or the first network device receives activation notification (or activation) related information.

For example, that the first network device triggers the multicast-related paging includes: The first network device triggers a multicast-related paging for the first terminal apparatus and/or a first multicast service.

For example, that the first network device receives the multicast data related to the first terminal apparatus includes: The first network device receives, from a core network device, multicast data related to the first terminal apparatus and/or the first multicast service.

For example, that the first network device receives the multicast-related paging includes: For the first terminal apparatus and/or the first multicast service, the first network device receives a multicast-related paging (for example, a CN paging) from the core network device; or for the first terminal apparatus and/or the first multicast service, the first network device receives a multicast-related paging (for example, an inter-base station paging) from another network device. For example, the another network device may be an access network device.

For example, that the first network device receives the activation notification (or activation) related information includes: For the first terminal apparatus and/or the first multicast service, the first network device receives the activation notification (or activation) related information from the core network device.

Step 803B: The first network device sends a second paging message.

For example, that the first network device sends the second paging message includes: The first network device sends the second paging message to a second network device. In a possible implementation, the first network device may be an access network device, and the second network device may be an access network device.

For example, the second paging message notifies that the first multicast service is activated, notifies that a first multicast session is activated, or indicates the first network device to page a terminal apparatus related to the first multicast service. For example, the second paging message may be replaced with another name, for example, a second message. This is not limited.

For example, the second paging message is associated with multicast.

For example, the second paging message may include any one or more of the following: information about an identifier of the first multicast service, information about a second identifier of the terminal apparatus, information about a first identifier of the terminal apparatus, and indication information (for example, third indication information) indicating that a multicast service (for example, the first multicast service) needs to be received in a connected state.

For example, the information about the second identifier of the terminal apparatus may include information about the second identifier of the terminal apparatus corresponding to the first multicast service. For example, the information about the first identifier of the terminal apparatus may include information about the first identifier of the terminal apparatus corresponding to the first multicast service.

For example, the terminal apparatus corresponding to the first multicast service may include a terminal apparatus (for example, some or all terminal apparatuses) that joins or subscribes to the first multicast service. For example, the terminal apparatus corresponding to the first multicast service may include the first terminal apparatus. For example, the first terminal apparatus is associated with the first multicast service. For example, the first multicast service may include a multicast service (for example, some or all multicast services) that the first terminal apparatus joins or subscribes to. For example, the first multicast service may include one or more multicast services.

For example, the information about the second identifier of the terminal apparatus may be used to calculate a PO. For example, the information about the second identifier of the terminal apparatus may be UE_ID. For example, UE_ID is obtained by calculating 5G-S-TMSI mod constant 1. For example, the constant 1 is 1024, 4096, 8192, 32768, or the like. For example, a quantity of bits of UE_ID may be 10 bits. For example, the quantity of bits of UE_ID is less than a quantity of bits of a 5G-S-TMSI (for example, 48 bits), so that occupied resources can be reduced.

For example, the first identifier of the terminal apparatus is associated with a RAN paging. For example, the first identifier of the terminal apparatus identifies a suspended (for example, suspended) UE context of the terminal apparatus, or identifies a UE context of the terminal apparatus. For example, the first identifier of the terminal apparatus may include any one or more of the following: a fulII-RNTI, a fulII-RNTI of the terminal apparatus, a fulII-RNTI stored in the terminal apparatus, an I-RNTI (Inactive RNTI), an I-RNTI of the terminal apparatus, and an I-RNTI stored in the first terminal apparatus.

Optionally, the information about the first identifier of the terminal apparatus is associated with the information about the second identifier of the terminal apparatus. Optionally, information about a first identifier of each terminal apparatus is associated with information about a second identifier of the terminal apparatus. Optionally, information about a first identifier of the first terminal apparatus is associated with information about a second identifier of the first terminal apparatus.

For example, the second network device obtains the second paging message, and the second network device may determine a second identifier of a terminal apparatus corresponding to a multicast paging or a multicast activation notification (for example, the second identifier of the first terminal apparatus). If there is an MT-SDT paging for the first terminal apparatus that needs to be sent, the second network device may skip sending the MT-SDT paging for the first terminal apparatus. When the second network device sends an air interface paging, a problem of a conflict between an MT-SDT transmission-related paging and a multicast-related paging (or a multicast-related paging, and the terminal apparatus needs to enter the RRC connected state to receive a multicast service) can be avoided.

Optionally, in step 804B, the first network device sends a third paging message.

For example, the third paging message indicates the first network device to page the first terminal device. For example, the third paging message may be replaced with another name, for example, a third message. This is not limited.

For example, the third paging message is associated with unicast.

For example, the third paging message may include information related to the MT-SDT paging for the first terminal device.

For example, the information related to the MT-SDT paging for the first terminal apparatus may include any one or more of the following: the information about the second identifier of the first terminal apparatus, the information about the first identifier of the first terminal apparatus, first indication information, and a parameter (for example, information about an RSRP threshold and/or information about a data volume threshold) needed to determine MT-SDT.

For example, step 803B may be performed before or after step 804B, or step 803B and step 804B may be performed at the same time. This is not limited in this application.

According to the solution provided in this embodiment of this application, the first network device sends the second paging message, and the second paging message may include the information about the first identifier of the terminal apparatus. In this way, a problem of a conflict between an MT-SDT transmission-related paging and a multicast-related paging (or a multicast-related paging, and the terminal apparatus needs to enter the RRC connected state to receive a multicast service) can be avoided on a network device side (for example, the second network device). For example, the second network device can know which terminal devices are associated with the multicast-related paging, to avoid the problem of the conflict between the MT-SDT transmission-related paging and the multicast-related paging (or the multicast-related paging, and the terminal apparatus needs to enter the RRC connected state to receive the multicast service), so that the first terminal apparatus in an RRC inactive state can enter the RRC connected state to receive data of the first multicast service. This provides a solution to resolve a problem that the first terminal apparatus in the RRC inactive state cannot receive a multicast service by entering the connected state, and ensures receiving of the multicast service.

It should be understood that, the conventional technology may change with evolution of the technical solutions, and the technical solutions provided in this application are not limited to the provided conventional technology.

It should be noted that different embodiments of this application or some steps (for example, any one or more steps) in different embodiments may be combined into a new embodiment. It should be noted that, some steps or any one or more steps in different embodiments may include an optional step in an embodiment, may include a mandatory step in an embodiment, or may include an optional step and a mandatory step in an embodiment. This is not limited in this application.

It should be noted that, unless otherwise specified or there is a logical conflict, terms and/or descriptions in different embodiments are consistent and may be mutually referenced.

It should be noted that a sequence of the steps in embodiments of this application is not limited in this application.

It should be noted that a determining sequence of different conditions in embodiments of this application is not limited in this application.

It should be noted that "after" and "when" in this application do not strictly limit time points.

It should be noted that nouns, terms, and the like in this application are merely examples, and may also have other names. This is not limited in this application.

The foregoing mainly describes the solutions in embodiments of this application from a perspective of interaction between various network elements. It can be understood that, to implement the foregoing functions, the network elements such as the first terminal apparatus and the first network device each include a corresponding structure and/or software module for performing each function. A person skill in the art should be easily aware that, with reference to the examples described in embodiments disclosed in this specification, units and algorithm steps can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional units of the first terminal apparatus and the first network device may be obtained through division based on the foregoing method examples. For example, functional units may be obtained through division in correspondence to functions, or two or more functions may be integrated into one processing unit. The integrated unit may be implemented in a form of hardware, or may be implemented in a form of a software functional unit. It should be noted that division into units in embodiments of this application is an example, is merely logical function division, and may be other division during actual implementation.

The foregoing describes the methods in embodiments of this application with reference to FIG. 5 to FIG. 8B. The following describes a communication apparatus that is provided in embodiments of this application and that performs the foregoing methods. A person skilled in the art can understand that the methods and the apparatus may be mutually combined and referenced. The communication apparatus provided in embodiments of this application may perform the steps performed by the first terminal apparatus and the first network device in the foregoing communication methods.

When an integrated unit is used, FIG. 9 shows a communication apparatus in the foregoing embodiment. The communication apparatus may include a communication module 913 and a processing module 912.

In an optional implementation, the communication apparatus may further include a storage module 911, configured to store program code and data of the communication apparatus.

In one aspect, the communication apparatus is a first terminal apparatus or a chip used in the first terminal apparatus. In this case, the communication module 913 is configured to support the communication apparatus in communicating with an external network element (for example, a network device). For example, the communication module 913 is configured to perform the signal receiving and sending operations performed by the first terminal apparatus in the foregoing method embodiments. The processing module 912 is configured to perform the signal processing operation performed by the first terminal apparatus in the foregoing method embodiments.

In an example, the communication module 913 is configured to perform the receiving action performed by the first terminal apparatus in step 501 in FIG. 5 in the foregoing embodiment. The processing module 912 is configured to perform the processing action performed by the first terminal apparatus in step 502A or step 502B in FIG. 5 in the foregoing embodiment.

Optionally, the communication module 913 is configured to perform step 504A or step 504B in FIG. 6 in the foregoing embodiment.

In another example, the communication module 913 is configured to perform the receiving action performed by the first terminal apparatus in step 701 in FIG. 7A in the foregoing embodiment. The processing module 912 is configured to perform step 702A, step 702B, step 702C, or step 702D in FIG. 7A in the foregoing embodiment.

Optionally, the communication module 913 is configured to perform step 704B and step 703B in FIG. 7B in the foregoing embodiment.

Optionally, the communication module 913 is configured to perform step 704C and step 703C in FIG. 7B in the foregoing embodiment.

Optionally, the communication module 913 is configured to perform step 703D in FIG. 7B in the foregoing embodiment.

In another aspect, the communication apparatus is a first network device or a chip used in the first network device. In this case, the communication module 913 is configured to support the communication apparatus in communicating with an external network element (for example, a terminal apparatus). For example, the communication module 913 is configured to perform the signal receiving and sending operations performed by the first network device in the foregoing method embodiments. The processing module 912 is configured to perform the signal processing operation performed by the first network device in the foregoing method embodiments.

In an example, the communication module 913 is configured to perform step 802A1 and 802A2 in FIG. 8A in the foregoing embodiment. The processing module 912 is configured to perform step 801A in FIG. 8A.

In another example, the communication module 913 is configured to perform step 803B and step 804B in FIG. 8B in the foregoing embodiment. The processing module 912 is configured to perform step 801B and step 802B in FIG. 8B.

The processing module 912 may be a processor or a controller, for example, a central processing unit, a general-purpose processor, a digital signal processor, an application-specific integrated circuit, a field-programmable gate array or another programmable logic device, a transistor logic device, a hardware component, or any combination thereof. The processor can implement or execute various example logical blocks, modules, and circuits that are described with reference to the content disclosed in this application. Alternatively, the processor may be a combination of processors implementing a computing function, for example, a combination of one or more microprocessors or a combination of a digital signal processor and a microprocessor. The communication module may be a transceiver, a transceiver circuit, a communication interface, or the like. The storage module may be a memory.

When the processing module 912 is the processor 41 or the processor 45, the communication module 913 is the transceiver 43, and the storage module 911 is the memory 42, the communication apparatus in this application may be the communication device shown in FIG. 4.

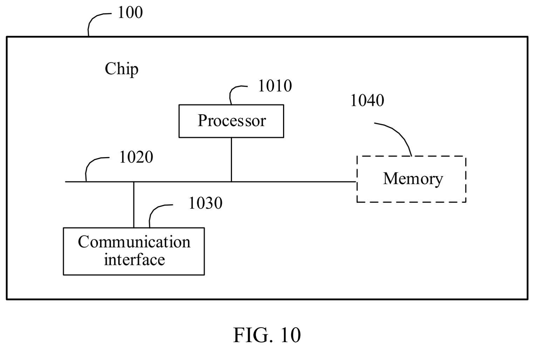

FIG. 10 is a diagram of a structure of a chip 100 according to an embodiment of this application. The chip 100 includes one, two or more (including two) processors 1010 and a communication interface 1030.

Optionally, the chip 100 further includes a memory 1040, and the memory 1040 may include a read-only memory and a random access memory and provide operation instructions and data for the processor 1010. A part of the memory 1040 may further include a non-volatile random access memory (non-volatile random access memory, NVRAM).

In some implementations, the memory 1040 stores the following elements, an execution module or a data structure, a subset thereof, or an extended set thereof.

In this embodiment of this application, a corresponding operation is performed by invoking the operation instructions stored in the memory 1040 (the operation instructions may be stored in an operating system).

In a possible implementation, structures of a first terminal apparatus and a first network device are similar, and different apparatuses may use different chips to implement respective functions.

The processor 1010 controls a processing operation of either the first terminal apparatus or the first network device. The processor 1010 may also be referred to as a central processing unit (central processing unit, CPU).

The memory 1040 may include a read-only memory and a random access memory and provide instructions and data for the processor 1010. A part of the memory 1040 may further include an NVRAM. For example, during application, the memory 1040, the communication interface 1030, and the memory 1040 are coupled together through a bus system 1020. In addition to a data bus, the bus system 1020 may further include a power bus, a control bus, a status signal bus, and the like. However, for clear description, various buses in FIG. 10 are marked as the bus system 1020.

The methods disclosed in the foregoing embodiments of this application can be applied to the processor 1010, or implemented by the processor 1010. The processor 1010 may be an integrated circuit chip with a signal processing capability. In an implementation process, the steps in the foregoing methods may be implemented by an integrated logic circuit of hardware in the processor 1010 or by using instructions in a form of software. The processor 1010 may be a general-purpose processor, a digital signal processor (digital signal processor, DSP), an ASIC, a field-programmable gate array (field-programmable gate array, FPGA) or another programmable logic device, a discrete gate, a transistor logic device, or a discrete hardware component. The processor 1010 can implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly implemented by a hardware decoding processor, or may be implemented by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1040. The processor 1010 reads information in the memory 1040 and completes the steps in the foregoing methods in combination with hardware in the processor.

In a possible implementation, the communication interface 1030 is configured to perform the receiving and sending steps performed by the first terminal apparatus in the embodiment shown in FIG. 5. The processor 1010 is configured to perform the processing step performed by the first terminal apparatus in the embodiment shown in FIG. 5.

In a possible implementation, the communication interface 1030 is configured to perform the receiving and sending steps performed by the first terminal apparatus in the embodiment shown in FIG. 6. The processor 1010 is configured to perform the processing step performed by the first terminal apparatus in the embodiment shown in FIG. 6.

In a possible implementation, the communication interface 1030 is configured to perform the receiving and sending steps of the first terminal apparatus in the embodiments shown in FIG. 7A and FIG. 7B. The processor 1010 is configured to perform the processing steps performed by the first terminal apparatus in the embodiments shown in FIG. 7A and FIG. 7B.

In a possible implementation, the communication interface 1030 is configured to perform the receiving and sending steps of the first network device in the embodiment shown in FIG. 8A or FIG. 8B. The processor 1010 is configured to perform the processing step performed by the first network device in the embodiment shown in FIG. 8A or FIG. 8B.

The communication module may be a communication interface of the apparatus, and is configured to receive a signal from another apparatus. For example, when the apparatus is implemented in a form of a chip, the communication module is a communication interface used by the chip to receive a signal from or send a signal to another chip or apparatus.

According to one aspect, a computer-readable storage medium is provided. The computer-readable storage medium stores instructions, and when the instructions are run, the functions performed by the first terminal apparatus in FIG. 5 to FIG. 7B are implemented.

According to one aspect, a computer program product including instructions is provided. The computer program product includes the instructions. When the instructions are run, the function performed by the first network device in FIG. 8A or FIG. 8B is implemented.

According to one aspect, a chip is provided. The chip is used in a first terminal apparatus. The chip includes at least one processor and a communication interface. The communication interface is coupled to the at least one processor. The processor is configured to run instructions, to implement the functions performed by the first terminal apparatus in FIG. 5 to FIG. 7B.

According to one aspect, a chip is provided. The chip is used in a network device. The chip includes at least one processor and a communication interface. The communication interface is coupled to the at least one processor. The processor is configured to run instructions, to implement the function performed by the first network device in FIG. 8A or FIG. 8B.

An embodiment of this application provides a communication system. The communication system includes a first terminal apparatus and a network device. The first terminal apparatus is configured to perform the functions performed by the first terminal apparatus in FIG. 5 to FIG. 7B, and the network device is configured to send a first paging message to the first terminal apparatus.

An embodiment of this application provides a communication system. The communication system includes at least a first network device. The first network device is configured to perform the function performed by the first network device in FIG. 8A or FIG. 8B.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs or instructions. When the computer program or instructions are loaded and executed on a computer, all or some of the procedures or functions according to embodiments of this application are executed. The computer may be a general-purpose computer, a dedicated computer, a computer network, a network device, a user equipment, or another programmable apparatus. The computer program or instructions may be stored in a computer-readable storage medium or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk, or a magnetic tape; may be an optical medium, for example, a digital video disc (digital video disc, DVD); or may be a semiconductor medium, for example, a solid state drive (solid state drive, SSD).

Although this application is described herein with reference to embodiments, in a process of implementing this application that claims protection, a person skilled in the art can understand and implement other variations of the disclosed embodiments by viewing the accompanying drawings, the disclosed content, and the appended claims. In the claims, the term "comprising" (comprising) does not exclude other components or steps, and "a" or "an" does not exclude "a plurality of". A single processor or another unit can implement several functions enumerated in the claims. Some measures are recorded in dependent claims different from each other, but this does not mean that these measures cannot be combined to produce great effect.

Although this application is described with reference to specific features and embodiments thereof, it is clear that various modifications and combinations may be made without departing from the spirit and scope of this application. Correspondingly, the specification and the accompanying drawings are merely example descriptions of this application defined by the appended claims, and are considered to cover any of and all modifications, variations, combinations, or equivalents within the scope of this application. It is clear that a person skilled in the art can make various modifications and variations to this application without departing from the spirit and scope of this application. In this way, this application is intended to cover these modifications and variations of this application provided that they fall within the scope defined by the following claims and equivalent technologies of this application.

## Claims

1. A communication method, comprising:

   receiving, by a first terminal apparatus, a first paging message; and
   when a first condition and a second condition are satisfied, initiating, by the first terminal apparatus, radio resource control RRC connection resume associated with not entering an RRC connected state; wherein
   the first condition comprises: the first paging message comprises information about a first identifier of the first terminal apparatus and first indication information;
   the first identifier of the first terminal apparatus is associated with a radio access network RAN paging;

the first indication information indicates mobile terminated MT-small data transmission SDT information; and the second condition comprises: the first terminal apparatus has not received a multicast paging or a multicast activation notification associated with entering the RRC connected state.

2. The method according to claim 1, wherein that the first terminal apparatus has not received the multicast paging or the multicast activation notification associated with entering the RRC connected state comprises any one of the following:

the first paging message does not comprise information about an identifier of a first multicast service;
the first paging message comprises information about an identifier of a first multicast service, and the first terminal apparatus has received second indication information, wherein the second indication information indicates that the first terminal apparatus receives a multicast service without needing to enter the RRC connected state, or the second indication information is associated with not entering the RRC connected state; or
the first paging message comprises information about an identifier of a first multicast service, and the first terminal apparatus has not received third indication information, wherein the third indication information indicates that the first terminal apparatus needs to enter the RRC connected state to receive a multicast service, or the third indication information is associated with entering the RRC connected state.

3. The method according to claim 1 or 2, wherein the first condition and the second condition are satisfied, and

a fifth condition is further satisfied; wherein
the fifth condition comprises any one of the following:

the first terminal apparatus has no uplink service; or
the first terminal apparatus has an uplink service, and a condition for initiating mobile originated MO-SDT is satisfied.

4. The method according to any one of claims 1 to 3, wherein the initiating, by the first terminal apparatus, the radio resource control RRC connection resume associated with not entering the RRC connected state comprises any one or more of the following:

when a condition for initiating CG-SDT is satisfied, initiating, by the first terminal apparatus by using a CG resource, the RRC connection resume associated with not entering the RRC connected state;
when a condition for initiating the CG-SDT is not satisfied, if the first terminal apparatus has no uplink service, initiating, by the first terminal apparatus by using a legacy RACH resource, the RRC connection resume associated with not entering the RRC connected state; or
when a condition for initiating the CG-SDT is not satisfied, if the first terminal apparatus has an uplink service and the condition for initiating the MO-SDT is satisfied, initiating, by the first terminal apparatus by using an SDT RACH resource, the RRC connection resume associated with not entering the RRC connected state.

5. The method according to any one of claims 1 to 4, wherein the initiating, by the first terminal apparatus, the radio resource control RRC connection resume associated with not entering the RRC connected state comprises:

determining, by the first terminal apparatus, a first RRC connection resume cause based on a first policy, wherein the first policy comprises the MT-SDT information; or
determining, by the first terminal apparatus, a first RRC connection resume cause based on a second policy, wherein the second policy comprises at least one of the MT-SDT information and information about an RRC connection resume cause indicated by an upper layer.

6. The method according to any one of claims 1 to 5, wherein after the receiving, by the first terminal apparatus, the first paging message, the method further comprises:

when a third condition is satisfied, the first condition and the third condition are satisfied, the first condition and a fourth condition are satisfied, or the first condition, the third condition, and the fourth condition are satisfied, initiating, by the first terminal apparatus, RRC connection resume associated with entering the RRC connected state; wherein
the third condition comprises any one of the following:

the first paging message comprises the information about the identifier of the first multicast service, and the first terminal apparatus has not received the second indication information; or

the first paging message comprises the information about the identifier of the first multicast service, and the first terminal apparatus has received the third indication information; and

the fourth condition comprises: the first terminal apparatus has an uplink service, and the condition for initiating the MO-SDT is not satisfied.

7. The method according to claim 6, wherein the initiating, by the first terminal apparatus, the RRC connection resume associated with entering the RRC connected state further comprises any one or more of the following:

determining, by the first terminal apparatus, a second RRC connection resume cause based on a third policy, wherein the third policy comprises an RRC connection resume cause indicated by an upper layer;

determining, by the first terminal apparatus, a second RRC connection resume cause based on a fourth policy, wherein the fourth policy comprises an access identity; or

determining, by the first terminal apparatus, a second RRC connection resume cause based on a fifth policy, wherein the fifth policy comprises at least one of an access identity and an RRC connection resume cause indicated by an upper layer.

8. The method according to claim 6 or 7, wherein

determining, by the first terminal apparatus, the second RRC connection resume cause based on the third policy when the third condition is not satisfied, or when the third condition is not satisfied and the fourth condition is satisfied;

determining, by the first terminal apparatus, the second RRC connection resume cause based on the fourth policy when the fourth condition is not satisfied, or when the third condition is satisfied and the fourth condition is not satisfied; or

determining, by the first terminal apparatus, the second RRC connection resume cause based on the fifth policy when the third condition and the fourth condition are satisfied.

9. The method according to any one of claims 2 to 8, wherein the first multicast service comprises a multicast service that the first terminal apparatus joins.

10. The method according to any one of claims 1 to 9, wherein

that the first terminal apparatus has received the second indication information comprises: the first paging message comprises the second indication information; and/or

that the first terminal apparatus has not received the second indication information comprises: the first paging message does not comprise the second indication information.

11. The method according to any one of claims 1 to 10, wherein

that the first terminal apparatus has not received the third indication information comprises: the first paging message does not comprise the third indication information; and/or

that the first terminal apparatus has received the third indication information comprises: the first paging message comprises the third indication information.

12. A communication method, comprising:

receiving, by a first terminal apparatus, a first paging message; and

when a sixth condition and a seventh condition are satisfied, skipping, by the first terminal apparatus, initiating radio resource control RRC connection resume and skipping entering an RRC idle state; wherein

the sixth condition comprises: the first terminal apparatus has received a multicast paging or a multicast activation notification associated with not entering an RRC connected state; and

the seventh condition comprises: the first paging message does not comprise an identifier of the first terminal apparatus.

13. The method according to claim 12, wherein the sixth condition comprises any one of the following:

the first paging message comprises information about an identifier of a first multicast service, and the first terminal apparatus has received second indication information, wherein the second indication information indicates that the first terminal apparatus receives a multicast service without needing to enter the RRC connected state, or the second indication information is associated with not entering the RRC connected state; or

the first paging message comprises information about an identifier of a first multicast service, and the first terminal apparatus has not received third indication information, wherein the third indication information indicates that the first terminal apparatus needs to enter the RRC connected state to receive a multicast service, or the third indication information is associated with entering the RRC connected state.

14. The method according to claim 12 or 13, wherein the seventh condition further comprises: the first terminal apparatus has not received a multicast paging or a multicast activation notification associated with entering the RRC connected state.

15. The method according to any one of claims 12 to 14, wherein after the receiving, by the first terminal apparatus, the first paging message, the method further comprises any one or more of the following:

when a first condition and a second condition are satisfied, initiating, by the first terminal apparatus, radio resource control RRC connection resume associated with not entering the RRC connected state;

when a third condition is satisfied, the first condition and the third condition are satisfied, the first condition and a fourth condition are satisfied, or the first condition, the third condition, and the fourth condition are satisfied, initiating, by the first terminal apparatus, RRC connection resume associated with entering the RRC connected state; or

when an eighth condition is satisfied, entering, by the first terminal apparatus, the RRC idle state; wherein the third condition comprises any one of the following:

the first paging message comprises the information about the identifier of the first multicast service, and the first terminal apparatus has not received the second indication information; or

the first paging message comprises the information about the identifier of the first multicast service, and the first terminal apparatus has received the third indication information;

the fourth condition comprises: the first terminal apparatus has an uplink service, and a condition for initiating MO-SDT is not satisfied; and

the eighth condition comprises: the first paging message comprises a second identifier of the first terminal apparatus.

16. A communication method, wherein the method comprises:

triggering, by a first network device, an MT-SDT paging, receiving, by a first network device, SDT data related to a first terminal apparatus, or receiving, by a first network device, an SDT-related paging; and

sending, by the first network device, an MT-SDT paging for the first terminal apparatus when a ninth condition and/or an eleventh condition are/is satisfied; wherein

the ninth condition comprises: the first network device does not send or does not need to send information related to a multicast paging or a multicast activation notification associated with entering an RRC connected state; and

the eleventh condition comprises: in first duration before the MT-SDT paging for the first terminal apparatus is sent or before the MT-SDT paging for the first terminal apparatus is sent, the first network device has not sent the information related to the multicast paging or the multicast activation notification associated with entering the RRC connected state.

17. The method according to claim 16, wherein that the first network device does not send or does not need to send the information related to the multicast paging or the multicast activation notification associated with entering the RRC connected state comprises any one or more of the following: for a multicast service that the first terminal apparatus joins or subscribes to, the first network device does not send or does not need to send the information related to the multicast paging or the multicast activation notification associated with entering the RRC connected state;

for a multicast service that the first terminal apparatus joins or subscribes to, the first network device has not received multicast data, paging-related information, or activation notification-related information sent by a core network device; or

for a multicast service that the first terminal apparatus joins or subscribes to, the first network device has not received paging-related information or activation notification-related information sent by another network device.

18. The method according to claim 16 or 17, wherein that the first network device has not sent the information related to the multicast paging or the multicast activation notification associated with entering the RRC connected state comprises any one or more of the following:

for the multicast service that the first terminal apparatus joins or subscribes to, the first network device has not sent the information related to the multicast paging or the multicast activation notification associated with entering the RRC connected state;
for the multicast service that the first terminal apparatus joins or subscribes to, the first network device has not received the multicast data, the paging-related information, or the activation notification-related information sent by the core network device; or
for the multicast service that the first terminal apparatus joins or subscribes to, the first network device has not received the paging-related information or the activation notification-related information sent by the another network device.

19. The method according to any one of claims 16 to 18, wherein after the triggering, by the first network device, the MT-SDT paging, receiving, by the first network device, the SDT data related to the first terminal apparatus, or receiving, by the first network device, the SDT-related paging, the method further comprises:

skipping, by the first network device, sending the MT-SDT paging for the first terminal apparatus when a tenth condition and/or a twelfth condition are/is satisfied; wherein
the tenth condition comprises: the first network device sends or needs to send the information related to the multicast paging or the multicast activation notification associated with entering the RRC connected state; and
the twelfth condition comprises: in first duration before the MT-SDT paging for the first terminal apparatus is sent or before the MT-SDT paging for the first terminal apparatus is sent, the first network device sends the information related to the multicast paging or the multicast activation notification associated with entering the RRC connected state.

20. The method according to any one of claims 16 to 19, wherein that the first network device sends or needs to send the information related to the multicast paging or the multicast activation notification associated with entering the RRC connected state comprises any one or more of the following:

for the multicast service that the first terminal apparatus joins or subscribes to, the first network device sends or needs to send the information related to the multicast paging or the multicast activation notification associated with entering the RRC connected state;
for the multicast service that the first terminal apparatus joins or subscribes to, the first network device has received the multicast data, the paging-related information, or the activation notification-related information sent by the core network device; or
for the multicast service that the first terminal apparatus joins or subscribes to, the first network device has received the paging-related information or the activation notification related information sent by the another network device.

21. The method according to any one of claims 16 to 20, wherein that the first network device sends the information related to the multicast paging or the multicast activation notification associated with entering the RRC connected state comprises any one or more of the following:

for the multicast service that the first terminal apparatus joins or subscribes to, the first network device sends the information related to the multicast paging or the multicast activation notification associated with entering the RRC connected state;
for the multicast service that the first terminal apparatus joins or subscribes to, the first network device has received the multicast data, the paging-related information, or the activation notification-related information sent by the core network device; or
for the multicast service that the first terminal apparatus joins or subscribes to, the first network device has received the paging-related information or the activation notification related information sent by the another network device.

22. A computer-readable storage medium, wherein the readable storage medium stores instructions, and when the instructions are executed, the method according to any one of claims 1 to 11 or the method according to any one of claims 12 to 15 is implemented.

23. A computer-readable storage medium, wherein the readable storage medium stores instructions, and when the instructions are executed, the method according to any one of claims 16 to 21 is implemented.

24. A chip system, wherein the chip system comprises a processor, the processor is coupled to a communication interface, the processor is configured to run a computer program or instructions to implement the method according to any one of claims 1 to 11 or the method according to any one of claims 12 to 15, and the communication interface is configured to communicate with a module other than the chip.

25. A chip system, wherein the chip system comprises a processor, the processor is coupled to a communication interface, the processor is configured to run a computer program or instructions to implement the method according to any one of claims 16 to 21, and the communication interface is configured to communicate with a module other than the chip.

26. A terminal apparatus, comprising at least one processor, wherein the at least one processor is coupled to a memory, and the at least one processor is configured to run instructions stored in the memory, to perform the method according to any one of claims 1 to 11 or the method according to any one of claims 12 to 15.

27. A network device, comprising at least one processor, wherein the at least one processor is coupled to a memory, and the at least one processor is configured to run instructions stored in the memory, to perform the method according to any one of claims 16 to 21.

28. A communication system, comprising a network device and a terminal apparatus, wherein the terminal apparatus is configured to perform the method according to any one of claims 1 to 11 or the method according to any one of claims 12 to 15.

29. A communication system, comprising a network device and a terminal apparatus, wherein the network device is configured to perform the method according to any one of claims 16 to 21.

| UE | Last serving gNB | gNB |
|---|---|---|

In an RRC inactive state

DL user data and DL signaling from 5GC

Step 101: Determine that a RAN paging trigger event occurs

Step 102: Send a RAN paging message

Step 103: Send a paging message

Step 104: Perform an RRC resume procedure to enter an RRC connected state

FIG. 1

100

200

FIG. 2A

FIG. 2B

FIG. 3A

FIG. 3B

41 45

Processor

CPU 0

CPU 1

Processor

CPU 0

CPU 1

42

Communication
line 44

Memory

43

Transceiver

## FIG. 4

Step 501: Receive a first paging message

Step 502A: Initiate RRC connection
resume associated with not entering
an RRC connected state

Step 502B: Initiate RRC connection
resume associated with entering an
RRC connected state

## FIG. 5

Step 501: Receive a first paging message

Step 502A: Initiate RRC connection resume associated with not entering an RRC connected state

Step 502B: Initiate RRC connection resume associated with entering an RRC connected state

Step 504A: Determine a first RRC connection resume cause

Step 504B: Determine a second RRC connection resume cause

Step 503A: Send a first message

Step 503B: Send a second message

FIG. 6

Step 701: A first terminal apparatus receives a first paging message

Step 702A: The first terminal apparatus skips initiating RRC connection resume, and the first terminal apparatus skips entering an RRC idle state

Step 702B: The first terminal apparatus initiates RRC connection resume associated with entering an RRC connected state

Step 702C: The first terminal apparatus initiates RRC connection resume associated with not entering an RRC connected state

Step 702D: The first terminal apparatus enters an RRC idle state

FIG. 7A

Step 701: A first terminal apparatus receives a first paging message

Step 702A: The first terminal apparatus skips initiating RRC connection resume, and the first terminal apparatus skips entering an RRC idle state

Step 702B: The first terminal apparatus initiates RRC connection resume associated with entering an RRC connected state

Step 702C: The first terminal apparatus initiates RRC connection resume associated with not entering an RRC connected state

Step 702D: The first terminal apparatus enters an RRC idle state

Step 704B: The first terminal apparatus determines a second RRC connection resume cause

Step 704C: The first terminal apparatus determines a first RRC connection resume cause

Step 703D: The first terminal apparatus sends a tenth message

Step 703B: The first terminal apparatus sends a second message

Step 703C: The first terminal apparatus sends a first message

FIG. 7B

Step 801A: A first network device triggers an MT-SDT paging, a first network device receives SDT data related to a first terminal apparatus, or a first network device receives an SDT-related paging

Ninth condition and/or eleventh condition are/is satisfied

Tenth condition and/or twelfth condition are/is satisfied

Step 802A1: The first network device sends an MT-SDT paging for the first terminal apparatus

Step 802A2: The first network device skips sending an MT-SDT paging for the first terminal apparatus

FIG. 8A

Step 801B: A first network device triggers an MT-SDT paging, a first network device receives SDT data related to a first terminal apparatus, or a first network device receives an SDT-related paging

Step 802B: The first network device triggers a multicast-related paging, the first network device receives multicast data related to the first terminal apparatus, the first network device receives a multicast-related paging, or the first network device receives activation notification (or activation) related information

Step 803B: The first network device sends a second paging message

Step 804B: The first network device sends a third paging message

FIG. 8B

Communication apparatus

Processing module — 912

Communication module — 913

Storage module — 911

FIG. 9

FIG. 10

## INTERNATIONAL SEARCH REPORT

| International application No. |
|---|
| **PCT/CN2024/085374** |

**A.    CLASSIFICATION OF SUBJECT MATTER**

H04W 76/27(2018.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, 3GPP: 寻呼, 激活, 组, 恢复, 非激活, 去激活, 非活动, 小数据, inactive, MT-SDT, Paging, Multicast, MBS, resume

**C.    DOCUMENTS CONSIDERED TO BE RELEVANT**

| Category* | Citation of document, with indication, where appropriate, of the relevant passages | Relevant to claim No. |
|---|---|---|
| A | CN 114642055 A (HUAWEI TECHNOLOGIES CO., LTD.) 17 June 2022 (2022-06-17) claims 1-43, and description, paragraphs [0055]-[0140] and [0249]-[0274] | 1-29 |
| A | CN 115334456 A (HUAWEI TECHNOLOGIES CO., LTD.) 11 November 2022 (2022-11-11) entire document | 1-29 |
| A | WO 2022231303 A1 (SAMSUNG ELECTRONICS CO., LTD.) 03 November 2022 (2022-11-03) entire document | 1-29 |
| A | INTEL CORPORATION. "MT-SDT mechanism (including RB, paging, resume and capabilities)" *3GPP TSG RAN WG2 Meeting #121, R2-2300434*, 16 February 2023 (2023-02-16), entire document | 1-29 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **11 June 2024** | **13 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/085374**

| Patent document cited in search report | | | Publication date (day/month/year) | Patent family member(s) | | | Publication date (day/month/year) |
|---|---|---|---|---|---|---|---|
| CN | 114642055 | A | 17 June 2022 | WO | 2021078275 | A1 | 29 April 2021 |
| | | | | US | 2021127414 | A1 | 29 April 2021 |
| | | | | US | 11284429 | B2 | 22 March 2022 |
| | | | | US | 2022167387 | A1 | 26 May 2022 |
| | | | | US | 11832274 | B2 | 28 November 2023 |
| | | | | EP | 4042787 | A1 | 17 August 2022 |
| | | | | EP | 4042787 | A4 | 30 November 2022 |
| CN | 115334456 | A | 11 November 2022 | WO | 2022237733 | A1 | 17 November 2022 |
| WO | 2022231303 | A1 | 03 November 2022 | KR | 20230172503 | A | 22 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310417360